# EUROPEAN PATENT SPECIFICATION

(11) **EP 2 835 746 B1**
(45) Date of publication and mention of the grant of the patent: **22.05.2019**
(21) Application number: 14000371.6
(22) Date of filing: 31.01.2014
(51) Int. Cl.: G06F 8/38, G06F 9/451, G06F 16/58

(54) **Terminal and method for controlling the same**
Endgerät und Verfahren zu seiner Steuerung
Terminal et son procédé de commande

(30) Priority: 05.08.2013 KR 20130092706
(43) Date of publication of application: 11.02.2015
(73) Proprietor: LG Electronics Inc., Seoul (KR)
(72) Inventor: Jaewoon, Kim, Seoul (KR); Kyueun, Yi, Seoul (KR)
(74) Representative: Beyer, Andreas

(56) References cited:
- US-A- 5 982 369
- Felix Lau ET AL: "A New Mobile Search Engine Interface", COMP390C - Directed Studies III (Honors Study Track) Final Report, 17 May 2010 (2010-05-17), XP055089575, Retrieved from the Internet: URL:http://www.cs.ust.hk/~rossiter/indepen dent_studies_projects/new_mobile_search_in terface/COMP390C_final_report_felix.pdf [retrieved on 2013-11-21]

## Description

### BACKGROUND OF THE INVENTION

### 1. Field of the Invention

The present invention relates to a terminal including a display unit that displays search result information for a keyword.

### 2. Description of the Related Art

Terminals can be classified into two types such as a mobile or portable terminal and a stationary terminal. The mobile terminal can be further classified into two types, such as a handheld terminal and a vehicle mounted terminal.

An image display device includes all devices for receiving and displaying broadcast, or recording and reproducing video, and recording and reproducing audio. The image display device includes a television, a computer monitor, a projector, a tablet, and the like.

In recent years, as terminals and image display devices provides various functions, the quality of their function for retrieving information stored in the memory or on a web has been enhanced. Accordingly, an enormous amount of information can be provided at once according to a search, and thus the user has difficulty in selectively finding and obtaining the desired results.

Furthermore, a search screen subsequent to performing a search displays search result information on a webpage containing a search engine that provides a search function with a layout of each execution screen of the application. As a result, the user has difficulty in selectively obtaining various search results.

Document D1 ("A New Mobile Search Engine Interface"; Lau, Felix) proposes a mobile search engine having an interface for a mobile device in which search engine results are partially displayed in a scrollable format and which may be refined by user inputs.

### SUMMARY OF THE INVENTION

Accordingly, one object of the present invention is to provide a terminal for arranging and providing a search result extracted from information based on a keyword with a set layout.

In order to accomplish the foregoing object of the present invention, a terminal according to an embodiment of the present invention may include a search unit configured to retrieve information associated with a keyword entered by a user, a display unit configured to display a preset number of graphic images that correspond to search result information extracted from the related information and receive a first touch input for displaying the search result information, and a controller configured to convert the search result information corresponding to the graphic image into another search result information extracted from the related information based on a second touch input applied to any one of the graphic images.

As an example associated with the present invention, the graphic image may include a representative image of the search result information corresponding to the graphic images, respectively.

As an example associated with the present invention, the controller may control the display unit to display a popup window containing the whole of the search result information based on the first touch input.

As an example associated with the present invention, the controller may control the display unit to display the search result information as a whole on the display unit based on the first touch input.

As an example associated with the present invention, the second touch input may be applied to at least one graphic image, and correspond to a consecutive touch input moved in one direction on the display unit, and the graphic image to which the second touch input is applied may include a representative image of the another search result information.

As an example associated with the present invention, the controller may convert search result information corresponding to at least one graphic image arranged along the one direction on the basis of the graphic image containing the graphic image to which the second touch input is initially applied into the another search result information, respectively.

As an example associated with the present invention, the terminal may further include a memory configured to record at least part of the extracted search result information by the user, wherein the display unit defines a region adjacent to the graphic image as a control command receiving region for receiving the user's touch input, and the controller controls the memory to store search result information corresponding to the graphic image when a third touch input applied to the selected graphic image is released from the control command receiving region.

As an example associated with the present invention, the controller may control the display unit to contain a representative image corresponding to the selected graphic image on a graphic image displayed in the control command receiving region, and when a plurality of search result information are stored in the memory, the graphic image of the storage region may include a display according to the plurality of search result information.

As an example associated with the present invention, the controller may control the memory to store search result information displayed on the display unit by the user, and the controller may control the display unit to display a representative image of the stored search result information on any one of the graphic images when there is search result information stored in the memory.

As an example associated with the present invention, the controller may control the search unit to execute a search for an associated keyword related to the keyword, and the controller may control the display unit to further display the preset number of additional graphic images corresponding to associated search result information, respectively, extracted from related information for the associated keyword.

As an example associated with the present invention, the controller may control the display unit to display the keyword and the associated keyword, and the keyword and the graphic image and the associated keyword and the additional graphic image may be displayed in different rows on the display unit.

As an example associated with the present invention, the controller may control the display unit to limit the display of the additional graphic image based on a touch input applied to one region of the display unit that displays the associated keyword.

As an example associated with the present invention, the controller may control the display unit to display an additional graphic image containing different associated search result information based on a touch input applied to one region of the display unit that displays the associated keyword.

As an example associated with the present invention, the controller may control the display unit to limit the display of the keyword and the graphic image by the display of the additional graphic image, and the controller may control the display unit to convert the associated keyword and the additional graphic image into the keyword and the graphic image, respectively, by a touch input applied to one region of the display unit containing the associated keyword.

As an example associated with the present invention, the controller may control the search unit to perform a search for a lower associated keyword related to the associated keyword based on a touch input applied to one region of the display unit that displays the associated keyword.

As an example associated with the present invention, the controller may control the display unit to convert the keyword into the associated keyword.

As an example associated with the present invention, the controller may control the display unit to limit the display of a representative image of the search result information based on the keyword.

In order to accomplish the foregoing task of the present invention, a terminal according to another embodiment of the present invention may include a display unit configured to display a search window for receiving the input of a keyword by a user, a search unit configured to retrieve information related to the keyword and information related to an associated keyword having relevance to the keyword, and a controller configured to extract a preset number of search result information and associated search result information from each of the related information, and control the display unit to display a graphic image corresponding to the search result information and an additional graphic image corresponding to associated search result information.

As an example associated with the present invention, the keyword and the graphic image of the search result information may be displayed to follow the same row, and the associated keyword and the associated search result information may be displayed to follow the same row, and the controller may control the search result information or additional graphic image based on a touch input applied to the keyword or associated keyword.

In order to accomplish the foregoing task of the present invention, a control method of a terminal according to another embodiment of the present invention may include retrieving information related to a keyword entered by a user, extracting a preset number of search result information from the related information, displaying graphic images that correspond to the search result information and receive a first touch input for displaying the search result information, and allowing another search result information among the related information to correspond to the one graphic image based on a second touch input applied to one of the graphic images.

As an example associated with the present invention, the graphic image may include a representative image of the search result information corresponding to the graphic images, respectively, and said allowing the another search result information to correspond to the one graphic image may include converting the representative image into a representative image of the another search result information when the second touch input is applied.

As an example associated with the present invention, the control method may further include retrieving information related to an associated keyword having relevance to the keyword, extracting a preset number of associated search result information from information related to the associated keyword, and displaying an additional graphic image corresponding to the associated search result information along with the graphic image.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a terminal according to an embodiment disclosed in the present invention;
FIGS. 2A and 2B are conceptual views illustrating a communication system in which a terminal according to the present invention is operable;
FIG. 3A is a front perspective view illustrating an example of a terminal associated with the present invention;
FIG. 3B is a rear perspective view illustrating a terminal illustrated in FIG. 3A;
FIG. 4A is an internal block diagram illustrating an image display apparatus according to an embodiment of the present invention;
FIG. 4B is a conceptual view illustrating an image display apparatus according to an embodiment of the present invention;
FIG. 5 is a flow chart illustrating a control method of a terminal according to an embodiment of the present invention;
FIGS. 6A and 6B are conceptual views illustrating a control method of a terminal in FIG. 5 according to each embodiment;
FIGS. 7A and 7B are conceptual views illustrating a method of displaying a search screen containing a graphic image;
FIGS. 8A through 8D are conceptual views illustrating a method of controlling the display of search result information based on a touch input applied to a graphic image;
FIG. 9 is a conceptual view illustrating a method of displaying an additional graphic image based on a touch input applied to a keyword;
FIGS. 10A and 10B are conceptual views illustrating a method of displaying search result information by a second touch input;
FIG. 11 is a flow chart illustrating a method of displaying the associated search result information of the associated keyword of a keyword;
FIG. 12 is a conceptual view illustrating a control method in FIG. 11 according to an embodiment;
FIGS. 13A through 13D are conceptual views illustrating a method of controlling an additional graphic image using an associated keyword; and
FIG. 14 is a conceptual view illustrating a method of displaying a graphic image corresponding to search result information according to another embodiment.

### DETAILED DESCRIPTION OF THE INVENTION

Hereinafter, preferred embodiments of the present invention will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the present invention, moreover, the detailed description will be omitted when a specific description for publicly known technologies to which the invention pertains is judged to obscure the gist of the present invention. Also, it should be noted that the accompanying drawings are merely illustrated to easily explain the concept of the invention, and therefore, they should not be construed to limit the technological concept disclosed herein by the accompanying drawings.

A terminal disclosed herein may include a portable phone, a smart phone, a laptop computer, a digital broadcast terminal, a personal digital assistant (PDA), a mobile multimedia player (PMP), a navigation, a slate PC, a tablet PC, an ultrabook, and the like. However, it would be easily understood by those skilled in the art that a configuration according to the following description may be applicable to a stationary terminal such as a digital TV, a desktop computer, and the like, excluding constituent elements particularly configured for mobile purposes.

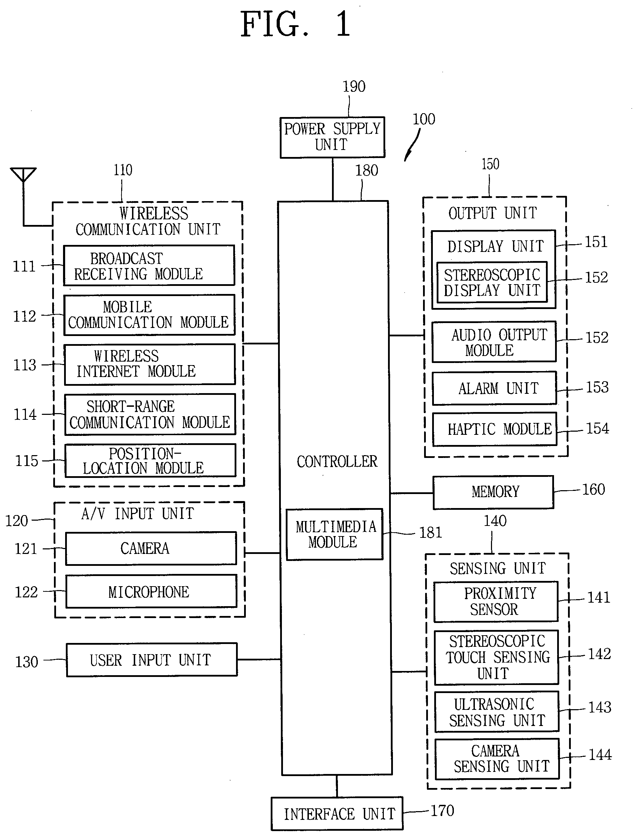

FIG. 1 is a block diagram illustrating a terminal 100 according to an embodiment disclosed in the present invention. The terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the mobile communication terminal may be implemented with greater or less number of elements than those illustrated elements.

Hereinafter, the foregoing constituent elements will be described in sequence.

The wireless communication unit 110 may include one or more modules allowing radio communication between the terminal 100 and a wireless communication system, or allowing radio communication between the terminal 100 and a network in which the terminal 100 is located. For example, the wireless communication unit 110 may include at least one of a broadcast receiving module 111, a mobile communication module 112, a wireless Internet module 113, a short-range communication module 114, a location information module 115, and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. Of course, the broadcast receiving module 111 may be configured to be suitable for every broadcast system transmitting broadcast signals as well as the digital broadcasting systems.

Broadcast signals and/or broadcast associated information received via the broadcast receiving module 111 may be stored in a memory 160.

The mobile communication module 112 transmits and receives wireless signals to and from at least one a base station, an external terminal and a server on a mobile communication network. Here, the wireless signals may include audio call signals, video call signals, or various formats of data according to the transmission and reception of text/multimedia messages.

The mobile communication module 112 may be configured to implement an video communication mode and a voice communication mode. The video communication mode refers to a configuration in which communication is made while viewing the image of the counterpart, and the voice communication mode refers to a configuration in which communication is made without viewing the image of the counterpart. The mobile communication module 112 may be configured to transmit or receive at least one of audio or video data to implement the video communication mode and voice communication mode.

The wireless Internet module 113 refers to a module for supporting wireless Internet access, and may be built-in or externally installed on the terminal 100. Here, it may be used a wireless Internet access technique including WLAN (Wireless LAN), Wi-Fi (Wireless Fidelity) Direct, DLNA (Digital Living Network Alliance), Wibro (Wireless Broadband), Wimax (World Interoperability for Microwave Access), HSDPA (High Speed Downlink Packet Access), and the like.

The short-range communication module 114 refers to a module for supporting a short-range communication. Here, it may be used a short-range communication technology including BluetoothTM, Radio Frequency IDentification (RFID), Infrared Data Association (IrDA), Ultra WideBand (UWB), ZigBee, Near Field Communication (NFC) and the like.

The location information module 115 is a module for checking or acquiring the location of the terminal, and there is a Global Positioning Module (GPS) module or Wireless Fidelity (Wi-Fi) as a representative example.

Referring to FIG. 1, the A/V(audio/video) input unit 120 receives an audio or video signal, and the A/V (audio/video) input unit 120 may include a camera 121 and a microphone 122. The camera 121 processes image frames, such as still or moving images, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Furthermore, the user's location information or the like may be produced from image frames acquired from the camera 121. Two or more cameras 121 may be provided according to the use environment.

The microphone 122 receives an external audio signal through a microphone in a phone call mode, a recording mode, a voice recognition mode, and the like, and processes the audio signal into electrical voice data. The processed voice data may be converted and output into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the terminal 100 such as an opened or closed configuration of the terminal 100, a location of the terminal 100, a presence or absence of user contact with the terminal 100, an orientation of the terminal 100, an acceleration/deceleration of the terminal 100, and the like, so as to generate a sensing signal for controlling the operation of the terminal 100. For example, when the terminal 100 is a slide phone type, the sensing unit 140 may sense whether a sliding portion of the terminal is open or closed. Other examples include sensing functions, such as the sensing unit 140 sensing the presence or absence of power provided by the power supply unit 190, the presence or absence of a coupling between the interface unit 170 and an external device.

The output unit 150 is configured to generate an output associated with visual sense, auditory sense or tactile sense, and may include a display unit 151, an audio output module 153, an alarm unit 154, a haptic module 155, and the like.

The display unit 151 may display (output) information processed in the terminal 100. For example, when the terminal 100 is in a phone call mode, the display unit 151 may display a User Interface (UI) or a Graphic User Interface (GUI) associated with a call. When the terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

Two or more display units 151 may be implemented according to a configured aspect of the terminal 100. For instance, a plurality of the display units 151 may be arranged on one surface to be spaced apart from or integrated with each other, or may be arranged on different surfaces.

Furthermore, the display unit 151 may be configured with a stereoscopic display unit 152 for displaying a stereoscopic image. Here, stereoscopic image indicates a 3-dimensional stereoscopic image, and the 3-dimensional stereoscopic image is an image for allowing the user to feel the gradual depth and reality of an object located on the monitor or screen as in a real space.

The 3-dimensional stereoscopic image may be implemented by using binocular disparity. Here, binocular disparity denotes a disparity made by the location of two eyes separated from each other, allowing the user to feel the depth and reality of a stereoscopic image when two eyes see different two-dimensional images and then the images are transferred through the retina and merged in the brain as a single image.

A stereoscopic method (glasses method), an auto-stereoscopic method (no-glasses method), a projection method (holographic method), and the like may be applicable to the stereoscopic display unit 152. The stereoscopic method primarily used in a home television receiver and the like may include a Wheatstone stereoscopic method and the like.

The examples of the auto-stereoscopic method may include a parallel barrier method, a lenticular method, an integral imaging method, and the like. The projection method may include a reflective holographic method, a transmissive holographic method, and the like.

In general, a 3-dimensional stereoscopic image may include a left image (image for the left eye) and a right image (image for the right eye). The method of implementing a 3-dimensional stereoscopic image can be divided into a top-down method in which a left image and a right image are disposed at the top and bottom within a frame, a left-to-right (L-to-R) or side by side method in which a left image and a right image are disposed at the left and right within a frame, a checker board method in which the pieces of a left image and a right image are disposed in a tile format, an interlaced method in which a left and a right image are alternately disposed for each column and row unit, and a time sequential or frame by frame method in which a left image and a right image are alternately displayed for each time frame, according to the method of combining a left image and a right image into a 3-dimensional stereoscopic image.

For 3-dimensional thumbnail images, a left image thumbnail and a right image thumbnail may be generated from the left and the right image of the original image frame, and then combined with each other to generate a 3-dimensional stereoscopic image. Typically, thumbnail denotes a reduced image or reduced still video. The left and right thumbnail image generated in this manner are displayed with a left and right distance difference on the screen in a depth corresponding to the disparity of the left and right image, thereby implementing a stereoscopic space feeling.

A left image and a right image required to implement a 3-dimensional stereoscopic image are displayed on the stereoscopic display unit 152 by a stereoscopic processing unit. The stereoscopic processing unit receives a 3D image to extract a left image and a right image from the 3D image, or receives a 2D image to convert it into a left image and a right image.

On the other hand, when the display unit 151 and a touch sensitive sensor (hereinafter, referred to as a "touch sensor") have an interlayer structure (hereinafter, referred to as a "touch screen"), the display unit 151 may be used as an input device in addition to an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. The touch sensor may be configured to sense not only a touched position and a touched area, but also a touch pressure at which a touch object body is touched on the touch sensor. Here, the touch object body may be a finger, a touch pen or stylus pen, a pointer, or the like as an object by which a touch is applied to the touch sensor.

When there is a touch input to the touch sensor, the corresponding signals are transmitted to a touch controller. The touch controller processes the signal(s), and then transmits the corresponding data to the controller 180. Accordingly, the controller 180 can sense which region of the display unit 151 has been touched.

Referring to FIG. 1, a proximity sensor 141 may be arranged at an inner region of the terminal 100 surrounded by the touch screen, or adjacent to the touch screen. The proximity sensor 141 may be provided as an example of the sensing unit 140. The proximity sensor 141 refers to a sensor to sense the presence or absence of an object approaching to a surface to be sensed, or an object disposed adjacent to a surface to be sensed, by using an electromagnetic field or infrared rays without a mechanical contact. The proximity sensor 141 has a longer lifespan and a more enhanced utility than a contact sensor.

The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity of an object having conductivity (hereinafter, referred to as a "pointer") to the touch screen is sensed by changes of an electromagnetic field. In this instance, the touch screen (touch sensor) may be categorized into a proximity sensor.

Hereinafter, for the sake of convenience of brief explanation, a behavior that the pointer is positioned to be proximate onto the touch screen without contact will be referred to as a "proximity touch", whereas a behavior that the pointer substantially comes in contact with the touch screen will be referred to as a "contact touch". For the position corresponding to the proximity touch of the pointer on the touch screen, such position corresponds to a position where the pointer faces perpendicular to the touch screen upon the proximity touch of the pointer.

The proximity sensor 141 senses a proximity touch, and a proximity touch pattern (for example, proximity touch distance, proximity touch direction, proximity touch speed, proximity touch time, proximity touch position, proximity touch moving status, etc.). Information relating to the sensed proximity touch and the sensed proximity touch patterns may be output onto the touch screen.

When the stereoscopic display unit 152 and a touch sensor are configured with an interlayer structure (hereinafter, referred to as a "stereoscopic touch screen") or the stereoscopic display unit 152 and a 3D sensor for detecting a touch operation are combined with each other, the stereoscopic display unit 152 may be used as a 3-dimensional input device.

As an example of the 3D sensor, the sensing unit 140 may include a proximity sensor 141, a stereoscopic touch sensing unit 142, an ultrasound sensing unit 143, and a camera sensing unit 144.

The proximity sensor 141 measures a distance between the sensing object (for example, the user's finger or stylus pen) and a detection surface to which a touch is applied using an electromagnetic field or infrared rays without a mechanical contact. The terminal may recognize which portion of a stereoscopic image has been touched by using the measured distance. In particular, when the touch screen is implemented with a capacitance type, it may be configured such that the proximity level of a sensing object is sensed by changes of an electromagnetic field according to the proximity of the sensing object to recognize a 3-dimensional touch using the proximity level.

The stereoscopic touch sensing unit 142 may be configured to sense the strength or duration time of a touch applied to the touch screen. For example, stereoscopic touch sensing unit 142 senses a user applied touch pressure, and if the applied pressure is strong, then the stereoscopic touch sensing unit 142 recognizes it as a touch for an object located farther from the touch screen.

The ultrasound sensing unit 143 may be configured to sense the location of the sensing object using ultrasound. For example, the ultrasound sensing unit 143 may be configured with an optical sensor and a plurality of ultrasound sensors. The optical sensor may be formed to sense light, and the ultrasound sensor may be formed to sense ultrasound waves.

Because light is much faster than ultrasound waves, the time for light to reach the optical sensor is far faster than the time for ultrasound waves to reach the ultrasound sensor. Accordingly, the location of the wave generating source may be calculated using a time difference between the light and ultrasound waves to reach the optical sensor.

The camera sensing unit 144 may include at least one of a camera 121, a photo sensor, and a laser sensor. For example, the camera 121 and laser sensor may be combined to each other to sense a touch of the sensing object to a 3-dimensional stereoscopic image. Distance information sensed by the laser sensor is added to a two-dimensional image captured by the camera to acquire 3-dimensional information.

In another example, a photo sensor may be deposited on the display element. The photo sensor may be configured to scan the motion of the sensing object in proximity to the touch screen. More specifically, the photo sensor is integrated with photo diodes and transistors in the rows and columns thereof, and a content placed on the photo sensor may be scanned by using an electrical signal that is changed according to the amount of light applied to the photo diode. In other words, the photo sensor performs the coordinate calculation of the sensing object according to the changed amount of light, and the location coordinate of the sensing object may be detected through this.

The audio output module 153 may output audio data received from the wireless communication unit 110 or stored in the memory 160, in a call-receiving mode, a call-placing mode, a recording mode, a voice recognition mode, a broadcast reception mode, and so on. The audio output module 153 may output audio signals relating to the functions performed in the terminal 100 (e.g., sound alarming a call received or a message received, and so on). The audio output module 153 may include a receiver, a speaker, a buzzer, and so on.

The alarm 154 outputs signals notifying occurrence of events from the terminal 100. The events occurring from the terminal 100 may include call received, message received, key signal input, touch input, and so on. The alarm 154 may output not only video or audio signals, but also other types of signals such as signals notifying occurrence of events in a vibration manner. Since the video or audio signals can be output through the display unit 151 or the audio output unit 153, the display unit 151 and the audio output module 153 may be categorized into part of the alarm 154.

The haptic module 155 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 155 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 155 may be configured to transmit tactile effects through a user's direct contact, or a user's muscular sense using a finger or a hand. The haptic module 155 may be implemented in two or more in number according to the configuration of the terminal 100.

The memory 160 may store a program for processing and controlling the controller 180. Alternatively, the memory 160 may temporarily store input/output data (e.g., phonebook, messages, still images, videos, and the like). Also, the memory 160 may store data related to various patterns of vibrations and sounds output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the terminal 100 may operate in association with a web storage which performs the storage function of the memory 160 on the Internet.

The interface unit 170 may generally be implemented to interface the terminal with external devices connected to the terminal 100. The interface unit 170 may allow a data reception from an external device, a power delivery to each component in the terminal 100, or a data transmission from the terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

In addition, the identification module may be configured as a chip for storing various information required to authenticate an authority to use the terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the terminal 100 via a port.

Furthermore, the interface unit 170 may serve as a path for power to be supplied from an external cradle to the terminal 100 when the terminal 100 is connected to the external cradle or as a path for transferring various command signals inputted from the cradle by a user to the terminal 100. Such various command signals or power inputted from the cradle may operate as signals for recognizing that the terminal 100 has accurately been mounted to the cradle.

The controller 180 typically controls the overall operations of the terminal 100. For example, the controller 180 performs the control and processing associated with telephony calls, data communications, video calls, and the like. The controller 180 can include a multimedia module 181 which provides multimedia playback. The multimedia module 181 may be configured as part of the controller 180 or as a separate component.

The controller 180 can also perform a pattern recognition processing so as to recognize writing or drawing input performed on the touch screen as text or image. In addition, the controller 180 can implement a lock state for limiting the user's control command input to applications when the state of the terminal satisfies a preset condition. Furthermore, the controller 180 can control a lock screen displayed in the lock state based on a touch input sensed through the display unit 151 in the lock state.

The power supply unit 190 receives external and internal power to provide power required for various components under the control of the controller 180.

Various embodiments described herein may be implemented in a computer or similar device readable medium using software, hardware, or any combination thereof.

For a hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units designed to perform the functions described herein. In some cases, such embodiments may be implemented in the controller 180 itself.

For a software implementation, the embodiments such as procedures or functions described in the present invention may be implemented with separate software modules. Each of the software modules may perform at least one function or operation described in the present invention.

Software codes can be implemented by a software application written in any suitable programming language. The software codes may be stored in the memory 160 and executed by the controller 180.

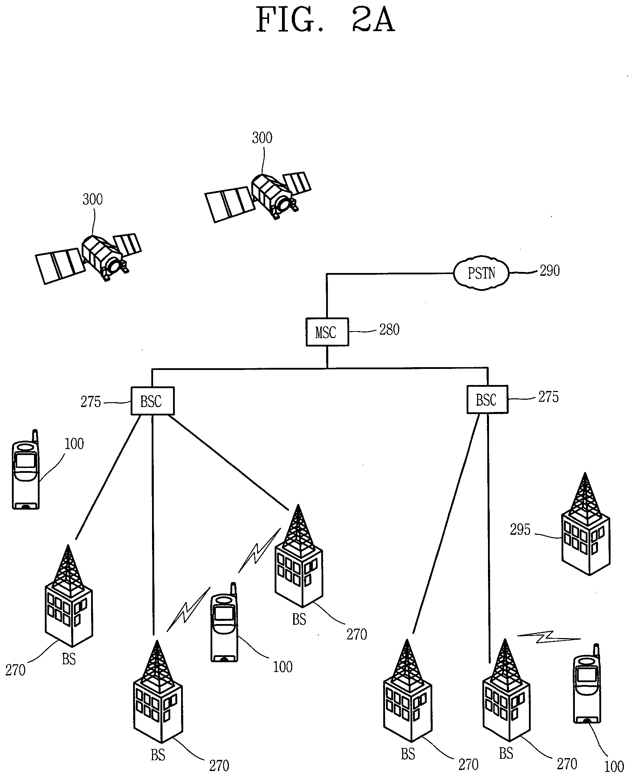

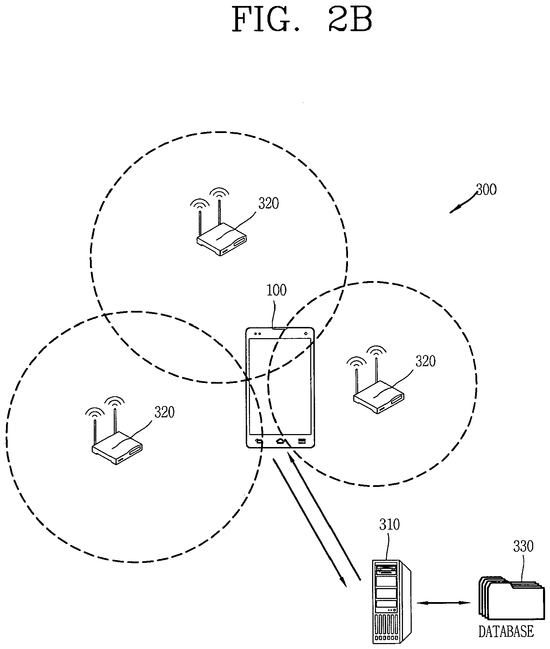

Next, a communication system that can be implemented through the terminal 100 according to the present invention will be described. FIGS. 2A and 2B are conceptual views illustrating a communication system in which a terminal 100 according to the present invention is operable.

First, referring to FIG. 2A, the communication system may use different wireless interfaces and/or physical layers. For example, wireless interfaces that can be used by the communication system may include, frequency division multiple access (FDMA), time division multiple access (TDMA), code division multiple access (CDMA), universal mobile telecommunications system (UMTS) (particularly, long term evolution (LTE)), global system for mobile communications (GSM), and the like.

Hereinafter, for the sake of convenience of explanation, the description disclosed herein will be limited to CDMA. However, the present invention may be also applicable to all communication systems including a CDMA wireless communication system.

As illustrated in FIG. 2A, a CDMA wireless communication system may include a plurality of terminals 100, a plurality of base stations (BSs) 270, a plurality of base station controllers (BSCs) 275, and a mobile switching center (MSC) 280. The MSC 280 may interface with a Public Switched Telephone Network (PSTN) 290, and the MSC 280 may also interface with the BSCs 275. The BSCs 275 may be connected to the BSs 270 via backhaul lines. The backhaul lines may be configured in accordance with at least any one of E1/T1, ATM, IP, PPP, Frame Relay, HDSL, ADSL, or xDSL, for example. Further, the system illustrated in FIG. 2A may include a plurality of BSCs 275.

Each of the plurality of BSs 270 may include at least one sector, each sector having an omni-directional antenna or an antenna indicating a particular radial direction from the base station 270. Alternatively, each sector may include two or more antennas with various forms. Each of the BSs 270 may be configured to support a plurality of frequency assignments, each frequency assignment having a particular spectrum (for example, 1.25 MHz, 5 MHz, etc.).

The intersection of a sector and frequency assignment may be referred to as a CDMA channel. The BSs 270 may also be referred to as Base Station Transceiver Subsystems (BTSs). In this instance, the term "base station" may collectively refer to a BSC 275, and at least one BS 270. The base stations may also indicate "cell sites". Alternatively, individual sectors for a specific BS 270 may also be referred to as a plurality of cell sites.

As illustrated in FIG. 2A, the Broadcasting Transmitter (BT) 295 may transmit broadcasting signals to the terminals 100 being operated within the system. The broadcast receiving module 111 as illustrated in FIG. 1 may be provided in the terminal 100 to receive broadcast signals transmitted by the BT 295.

In addition, FIG. 2A illustrates several global positioning system (GPS) satellites 300. Such satellites 300 facilitate locating at least one of a plurality of terminals 100. Though two satellites are illustrated in FIG. 2A, location information may be obtained with a greater or fewer number of satellites. The location information module 115 as illustrated in FIG. 1 may cooperate with the satellites 300 as illustrated in FIG. 2A to obtain desired location information. However, other types of position detection technology, all types of technologies capable of tracing the location may be used in addition to a GPS location technology. Furthermore, at least one of the GPS satellites 300 may alternatively or additionally provide satellite DMB transmissions.

During the operation of a wireless communication system, the BS 270 may receive reverse-link signals from various terminals 100. At this time, the terminals 100 may perform calls, message transmissions and receptions, and other communication operations. Each reverse-link signal received by a specific base station 270 may be processed within that specific base station 270. The processed resultant data may be transmitted to an associated BSC 275. The BSC 275 may provide call resource allocation and mobility management functions including the systemization of soft handoffs between the base stations 270. Furthermore, the BSCs 275 may also transmit the received data to the MSC 280, which provides additional transmission services for interfacing with the PSTN 290. Furthermore, similarly, the PSTN 290 may interface with the MSC 280, and the MSC 280 may interface with the BSCs 275. The BSCs 275 may also control the BSs 270 to transmit forward-link signals to the terminals 100.

Next, a method of acquiring the location information of a terminal using a Wi-Fi (Wireless Fidelity) positioning system (WPS) will be described with reference to FIG. 2B. The Wi-Fi positioning system (WPS) 300 refers to a location determination technology based on a wireless local area network (WLAN) using Wi-Fi as a technology for tracking the location of the terminal 100 using a Wi-Fi module provided in the terminal 100 and a wireless access point 320 for transmitting and receiving to and from the Wi-Fi module.

The Wi-Fi positioning system 300 may include a Wi-Fi location determination server 310, a terminal 100, a wireless access point (AP) 320 connected to the terminal 100, and a database 330 stored with any wireless AP information.

The Wi-Fi location determination server 310 extracts the information of the wireless AP 320 connected to the terminal 100 based on a location information request message (or signal) of the terminal 100. The information of the wireless AP 320 may be transmitted to the Wi-Fi location determination server 310 through the terminal 100 or transmitted to the Wi-Fi location determination server 310 from the wireless AP 320.

The information of the wireless AP extracted based on the location information request message of the terminal 100 may be at least one of MAC address, SSID, RSSI, channel information, privacy, network type, signal strength and noise strength.

The Wi-Fi location determination server 310 receives the information of the wireless AP 320 connected to the terminal 100 as described above, and compares the received wireless AP 320 information with information contained in the preestablished database 330 to extract (or analyze) the location information of the terminal 100.

Referring to FIG. 2B, as an example, the wireless AP connected to the terminal 100 is illustrated as a first, a second, and a third wireless AP 320. However, the number of wireless APs connected to the terminal 100 may be changed in various ways according to a wireless communication environment in which the terminal 100 is located. When the terminal 100 is connected to at least one of wireless APs, the Wi-Fi positioning system 300 can track the location of the terminal 100.

Next, considering the database 330 stored with any wireless AP information in more detail, various information of any wireless APs disposed at different locations may be stored in the database 330. The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the Wi-Fi location determination server 310 may retrieve wireless AP information corresponding to the information of the wireless AP 320 connected to the terminal 100 from the database 330 to extract the location information matched to the searched wireless AP, thereby extracting the location information of the terminal 100.

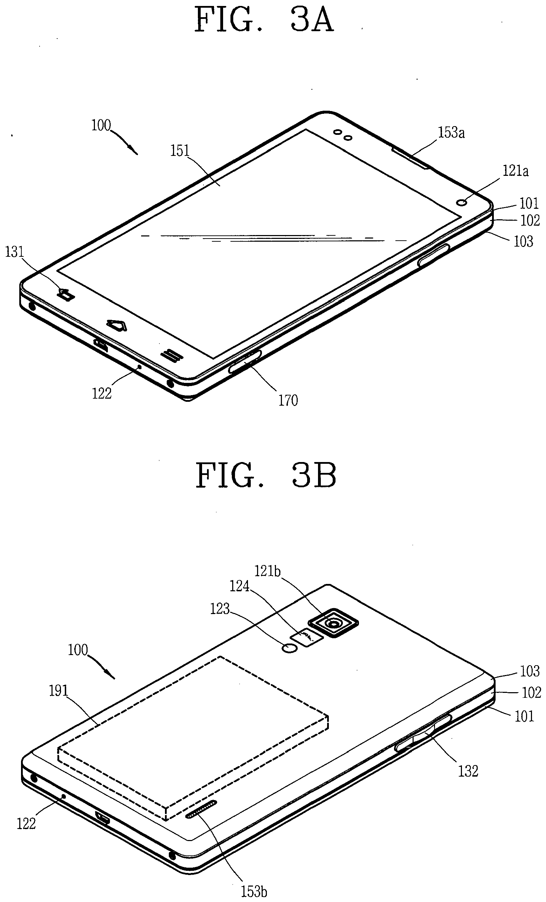

Next, FIG. 3A is a front perspective view illustrating an example of the terminal 100 associated with the present invention. The terminal 100 disclosed herein is provided with a bar-type terminal body. However, the present invention is not limited to this, but is also applicable to various structures such as watch type, clip type, glasses type or folder type, flip type, swing type, swivel type, or the like, in which two and more bodies are combined with each other in a relatively movable manner.

The body includes a case (casing, housing, cover, etc.) forming the appearance of the terminal. In this embodiment, the case may be divided into a front case 101 and a rear case 102. Various electronic components are incorporated into a space formed between the front case 101 and the rear case 102. At least one middle case may be additionally disposed between the front case 101 and the rear case 102, and a battery cover 103 for covering the battery 191 may be detachably configured at the rear case 102. The cases may be formed by injection-molding a synthetic resin or may be also formed of a metal, for example, stainless steel (STS), titanium (Ti), or the like.

A display unit 151, a first audio output module 153a, a first camera 121a, a first manipulating unit 131 and the like may be disposed on a front surface of the terminal body, and a microphone 122, an interface unit 170, a second manipulating unit 132 and the like may be provided on a lateral surface thereof.

The display unit 151 may be configured to display (output) information being processed in the terminal 100. The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

The display unit 151 may include a touch sensing mechanism to receive a control command by a touch method. When a touch is made to any one place on the display unit 151, the touch sensing mechanism may be configured to sense this touch and enter the content corresponding to the touched place. The content entered by a touch method may be a text or numerical value, or a menu item capable of indication or designation in various modes.

The touch sensing mechanism may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121a are disposed in a region adjacent to one of both ends of the display unit 151, and the first manipulation input unit 131 and the microphone 122 are disposed in a region adjacent to the other end thereof. The second manipulation interface 132, the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this instance, a hole independently formed to output audio sounds is not seen or hidden in terms of appearance, thereby further simplifying the appearance of the terminal 100. However, the present invention is not limited to this, but a hole for releasing the sounds may be formed on the window.

The first camera 121a processes video frames such as still or moving images obtained by the image sensor in a video call mode or capture mode. The processed video frames may be displayed on the display unit 151.

The user input unit 130 is manipulated to receive a command for controlling the operation of the terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

The present drawing illustrates the first manipulation unit 131 is a touch key, but the present invention is not limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being output from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating terminal 100 illustrated in FIG. 3A. Referring to FIG. 3B, a second camera 121b may be additionally mounted at a rear surface of the terminal body, namely, the rear case 102. The second camera 121b has an image capturing direction, which is substantially opposite to the direction of the first camera unit 121a, and may have a different number of pixels from that of the first camera unit 121a.

For example, it is preferable that the first camera 121a has a relatively small number of pixels enough not to cause difficulty when the user captures his or her own face and sends it to the other party during a video call or the like, and the second camera 121b has a relatively large number of pixels since the user often captures a general object that is not sent immediately. The first and the second camera 121a, 121b may be provided in the terminal body in a rotatable and popupable manner.

Furthermore, a flash 123 and a mirror 124 may be additionally disposed adjacent to the second camera 121b. The flash 123 illuminates light toward an object when capturing the object with the second camera 121b. The mirror 124 allows the user to look at his or her own face, or the like, in a reflected way when capturing himself or herself (in a self-portrait mode) by using the second camera 121b.

A second audio output unit 153b may be additionally disposed at a rear surface of the terminal body. The second audio output unit 153b together with the first audio output unit 153a can implement a stereo function, and may be also used to implement a speaker phone mode during a phone call.

An antenna for receiving broadcast signals may be additionally disposed at a lateral surface of the terminal body in addition to an antenna for making a phone call or the like. The antenna constituting part of the broadcast receiving module 111 may be provided in the terminal body in a retractable manner.

A power supply unit 190 for supplying power to the terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

Furthermore, the extracted location information of the terminal 100 may be transmitted to the terminal 100 through the Wi-Fi location determination server 310, thereby allowing the terminal 100 to acquire location information.

According to an embodiment of the present invention, the terminal may perform a function of retrieving information related to a keyword entered by the user using a communication system and the wireless communication unit 110. For example, the terminal may retrieve information desired by the user among information stored in the memory 160 or retrieve information related to the input keyword among information existing on a web.

The controller 180 controls the display unit to display the retrieved information. According to an embodiment of the present invention, the controller controls the display unit to arrange and display the retrieved information according to a preset layout.

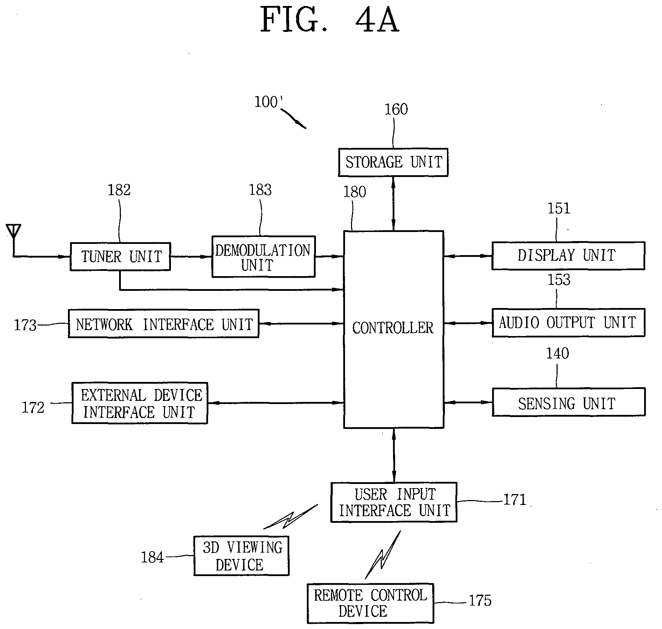

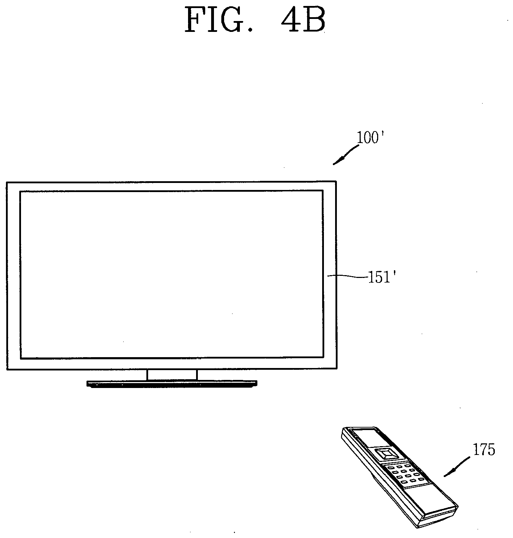

Further, a terminal according to the present invention may include a portable terminal as well as an image display apparatus for displaying an image. FIG. 4A is an internal block diagram illustrating an image display apparatus according to an embodiment of the present invention, and FIG. 4B is a conceptual view illustrating an image display apparatus according to an embodiment of the present invention.

Referring to FIGS. 1, 4A and 4B, an image display apparatus 100' according to an embodiment of the present invention may include a tuner unit 182, a demodulation unit 183, an external device interface unit 172, a network interface unit 173, a storage unit 160, a user input interface unit 171, a sensor unit, a controller 180, a display unit 151', an audio output unit 153, and a 3D viewing device 184. The tuner unit 182 selects a RF broadcast signal corresponding to the channel selected by the user or every prestored channel from the radio frequency (RF) broadcast signals received through an antenna. Furthermore, the tuner unit 182 converts the selected RF broadcast signal into an intermediate frequency signal, or a baseband video or audio signal.

For example, the selected RF broadcast signal may be converted into a digital IF (DIF) signal if it is a digital broadcast signal, and may be converted into an analog baseband video or audio signal (CVBS/SIF) if it is an analog broadcast signal. In other words, the tuner unit 182 can process digital broadcast signals or analog broadcast signals. The analog baseband video or audio signal (CVBS/SIF) output from the tuner unit 182 may be directly input to the controller 170.

Furthermore, the tuner unit 182 may receive RF broadcast signals with a single carrier according to the Advanced Television System Committee (ATSC) method or RF broadcast signals with a plurality of carriers according to the Digital Video Broadcasting (DVB) method.

In addition, the tuner unit 182 may sequentially select RF broadcast signals on all broadcast channels that have been stored through a channel storage function among the RF broadcast signals received through the antenna to convert it into an intermediate frequency signal or baseband video or audio signal.

Meanwhile, the tuner unit 182 may be provided with a plurality of tuners to receive broadcast signals with a plurality of channels. Otherwise, it may be provided with a single tuner for receiving broadcast signals with a plurality of channels at the same time.

The demodulation unit 183 receives a digital IF (DIF) signal that has been transformed by the tuner unit 182 to perform a demodulation operation. For example, when the digital IF signal output from the tuner unit 182 is the ATSC method, the demodulation unit 120 may perform 8-vestigal side band (8-VSB) demodulation, for instance. Furthermore, the demodulation unit 183 may perform channel decoding. For this purpose, the demodulation unit 183 may include a Trellis decoder, a de-interleaver, a Reed-Solomon decoder, and the like, to perform Trellis decoding, de-interleaving, and Reed-Solomon decoding.

For example, when the digital IF signal is the DVB method, the demodulation unit 183 may perform Coded Orthogonal Frequency Division Modulation (COFDMA) demodulation, for instance. Furthermore, the demodulation unit 183 may perform channel decoding. For this purpose, the demodulation unit 183 may include a convolution decoder, a de-interleaver, a Reed-Solomon decoder and the like to perform convolution decoding, de-interleaving, and Reed-Solomon decoding. The demodulation unit 183 may perform demodulation and channel decoding and then output a stream signal (TS). Here, the stream signal may be a multiplexed signal with video, audio, or data signals. For example, the stream signal may be a multiplexed MPEG-2 Transport Stream (TS) with an MPEG-2 video signal, a Dolby AC-3 audio signal, and the like. More specifically, MPEG-2 TS may include a 4-byte header, and a 184-byte payload.

The foregoing demodulation unit 183 may be provided in a separate manner according to the ATSC method or DVB method. In other words, it can be provided with an ATSC demodulation unit and a DVB demodulation unit.

The stream signal output from the demodulation unit 183 may be input to the controller 180. The controller 180 can perform inverse-multiplexing, video/audio signal processing and the like, and then output video to the display unit 151', and output audio to the audio output unit 153.

The external device interface unit 172 may transmit or receive data to or from the external device 190 connected thereto. For this purpose, the external device interface unit 172 may include an A/V input and output unit or wireless communication unit. The external device interface unit 172 may be connected to an external device such as a digital versatile disc (DVD), a Blu-ray disc, a gaming device, a camera, a camcorder, a computer (notebook) and the like in a wired/wireless manner.

The external device interface unit 172 may transfer video, audio or data signals received from the outside through the external device 190 connected thereto to the controller 180 of the image display apparatus 100. Furthermore, the external device interface unit 172 may output video, audio or data signals processed by the controller 170 to the external device connected thereto. For this purpose, the external device interface unit 172 may include an A/V input and output unit or wireless communication unit.

The A/V input and output unit may include a USB terminal, a Composite Video Banking Sync (CVBS) terminal, a component terminal, a S-video terminal (analog), a Digital Visual Interface (DVI) terminal, a High Definition Multimedia Interface (HDMI) terminal, a RGB terminal, a D-SUB terminal, and the like.

The wireless communication unit may perform short-range wireless communication with other electronic devices. The image display apparatus 100 may be connected to other electronic devices in a network according to a communication standard such as Bluetooth, Radio Frequency Identification (RFID), Infrared Data Association (IrDA), Ultra Wideband (UWB), ZigBee, Digital Living Network Alliance (DLNA), and the like.

Furthermore, the external device interface unit 172 may be connected to at least one of various set-top boxes and the foregoing various terminals to perform an input and output operation with the set-top box. Also, the external device interface unit 172 may transmit or receive to or from the 3D viewing device 184.

The network interface unit 173 provides an interface for connecting the image display apparatus 100 to a wired/wireless network including the Internet network. The network interface unit 173 may include an Ethernet terminal, or the like, for example, for the connection with a wired network, and a communication standard such as Wireless LAN (WLAN, Wi-Fi), Wireless broadband (Wibro), World Interoperability for Microwave Access (Wimax), High Speed Downlink Packet Access (HSDPA), for example, for the connection with a wireless network.

The network interface unit 173 may receive content or data provided by the Internet or content provider or network operator through a network. In other words, the network interface unit 173 may receive content such as a movie, an advertisement, a game, VOD, a broadcast signal and the like, and information related to the content, provided from the Internet or content provider or the like through a network. Furthermore, the network interface unit 173 may receive the firmware's update information or update file provided by the network operator. In addition, the network interface unit 173 may send data to the Internet, content provider, or network operator.

Furthermore, the network interface unit 173 may be connected to an Internet Protocol (IP) TV, for example, to receive video, audio or data signals processed by a set-top box for IPTV and transfer them to the controller 180, and transfer signals processed by the controller 180 to the set-top box for IPTV.

The foregoing IPTV may include ADSL-TV, VDSL-TV, FTTH-TV services, and the like, and may also include TV over DSL, Video over DSL, TV over IP (TVIP), Broadband TV (BTV) services, and the like. Furthermore, the foregoing IPTV may include Internet TV and full-browsing TV services capable of accessing the Internet.

The storage unit 160 may store programs for each signal processing or control within the controller 180 and may store signal-processed video, audio, or data signals. In addition, the storage unit 160 may perform a function for temporarily storing video, audio, or data signals received at the external device interface unit 172. The storage unit 160 may store information for a predetermined broadcast channel through a channel storage function such as a channel map or the like.

The storage unit 160 may include at least one type of storage medium including a flash memory type, a hard disk type, a multimedia card micro type, a card-type memory (e.g., SD or XD memory, etc.), a Random Access Memory (RAM), a Read-Only Memory (EPROM, etc.), and the like. The image display apparatus 100 may reproduce a file (a video file, a still image file, a music file, a document file, etc.) stored in the storage unit 160 to provide to the user.

FIG. 1 illustrates an embodiment in which the storage unit 160 is provided in a separate manner from the controller 180, but the scope of the present invention is not limited to this. The storage unit 160 may be included in the controller 180. The user input interface unit 171 may transfer the user's input signals to the controller 180 or transfer signals received from the controller 180 to the user.

For example, the user input interface unit 171 may receive user input signals, such as power on/off, channel selection, screen setup and the like, generated from the remote control device 200 or transmit signals generated from the controller 170 to the remote control device 200 according to various communication methods, such as radio frequency (RF) communication, infrared (IR) communication and the like.

In addition, for example, the user input interface unit 171 may transfer user input signals entered from a local key, such as a power key, a channel key, a volume key, a setting key and the like, to the controller 180. The sensing unit 140 may sense the user's location or user's gesture, touch or the location of the 3D viewing device 184. To this end, the sensing unit 140 may include a touch sensor, a voice sensor, a location sensor, an operation sensor, a gyro sensor, and the like.

The sensed user's location or user's gesture, touch or the location signals of the 3D viewing device 184 may be input to the controller 180. Otherwise, contrary to the drawing, it may be also input to the controller 180 through the user input interface unit 171.

The controller 180 can inverse-multiplex a stream received from the tuner unit 182, demodulation unit 183 or external device interface unit 172, and otherwise, process the inverse-multiplexed signals to generate or output signals for video or audio output.

The video signal that has been image-processed in the controller 180 can be input to the display unit 151' and displayed as video corresponding to the relevant video signal. Furthermore, the video signal that has been image-processed in the controller 180 can be input to an external output device through the external device interface unit 172.

The audio signal processed in the controller 180 can be audio-output to the audio output unit 153. Furthermore, the audio signal processed in the controller 180 can be input to an external output device through the external device interface unit 172.

In addition, the controller 180 can control an overall operation within the image display apparatus 100. For example, the controller 180 can control the tuner unit 182 to tune a RF broadcast signal corresponding to the user's tuned channel or prestored channel.

Furthermore, the controller 180 can control the image display apparatus 100 using the user's command received through the user input interface unit 150 or its internal program. For example, the controller 180 can control the tuner unit 182 to receive the signal of a channel selected according to a predetermined channel select command received through the user input interface unit 171. Then, the controller 180 processes video, audio or data signals of the selected channel. The controller 180 can allow the user's selected channel information or the like to be output through the display unit 151' or the audio output unit 153 along with the processed video or audio signal.

In another example, the controller 180 can allow video or audio signals generated from an external device 190, for example, a camera or camcorder, received through the external device interface unit 172, to be output through the display unit 151' or the audio output unit 153 according to an external device video play command received through the user input interface unit 171.

Meanwhile, the controller 180 can control the display unit 151' to display an image. For example, the controller 180 can control a broadcast image received through the tuner unit 182, an external input image received through the external device interface unit 172, an image received through the network interface unit 173, or an image stored in the storage unit 160, to be displayed on the display unit 151'.

Here, the image displayed on the display unit 151' may be a still or moving image, and otherwise, may be a 2D or 3D image. Further, the controller 180 allows a predetermined object within an image displayed on the display 151' to be generated and displayed as a 3D object. For example, the object may be at least one of an accessed web page (newspaper, magazine, etc.), EPG (Electronic Program Guide), various menus, a widget, an icon, a still image, a moving image, and text. The 3D object may be processed to have a depth different from the image displayed on the display 151'. Preferably, the 3D object may be processed to be more protruded than that of the image displayed on the display 151'.

Meanwhile, the controller 180 recognizes the user's location based on an image obtained from a capture unit. For example, the controller 180 can recognize a distance (z-axis coordinate) between the user and the image display apparatus 100. In addition, the controller 180 can recognize the x-axis and y-axis coordinates corresponding to the user's location within the display unit 151'.

In addition, the controller 180 can perform signal processing to allow the viewing of the relevant image according to the viewing device. For example, when the sensing unit 140 or capture unit senses the existence, operation or non-operation, or number of the viewing devices 195, the controller 180 can perform signal processing for pairing with the viewing device 195. In other words, the controller 180 can control pairing signals to be output to the viewing device 184, thereby receiving a response signal from the viewing device 195.

Meanwhile, the controller 180 can control the tuner unit 182 to receive broadcast images according to the sensed number of the viewing devices 195. For example, when the sensed number of viewing devices is three, the controller 180 can control the tuner unit 182 provided with a plurality of tuners, thereby receiving broadcast images with different channels. Furthermore, the controller 180 can control the tuner unit 182 to be synchronized with each viewing device, thereby displaying each broadcast image at different times.

In addition, the controller 180 can receive an external input image being entered thereto according to the sensed number of viewing devices. For example, when the sensed number of viewing devices is three, it may be controlled to receive a broadcast image, an external input image from an optical device such as DVD or the like, and an external input image from a PC. Furthermore, the controller 180 can control the tuner unit 182 to be synchronized with each viewing device, thereby displaying each image (broadcast image, DVD image, PC image) at different times.

Meanwhile, the controller 180 can control the vertical synchronization frequency (Vsync) of the displayed image to be increased whenever the sensed number of viewing devices is increased during the image display, thereby displaying the relevant images. For example, when a third viewing device is used while a first and a second image are displayed in synchronization with a first viewing device and a second 3D viewing device, respectively, for a period of 1/60 second, the first through the third image may be controlled to be displayed in synchronization with the first through the third viewing device, respectively, for a period of 1/60 seconds. In other words, the controller 180 can control the first and second images to be displayed at a vertical synchronization frequency of 120 Hz, and then the first through third images to be displayed at a vertical synchronization frequency of 180 Hz.

In addition, the controller 180 can set the viewable image search object, for example, the channel search object of a broadcast image, to vary for each viewing device. For example, the controller 180 can set the channel search object to vary, for each age such as adults, children, and the like, thereby allowing the search object to be varied during the channel search. In addition, it is also possible to provide search objects for each category, such as preference, gender, recent viewing channel, or program rating.

Meanwhile, when the same image is selected at the first and the second viewing device, the controller 180 can control to notify a message indicating that they are duplicated. Such a message may be displayed in the form of an object on the display unit 151', or transmitted as a wireless signal to each viewing device.

The image display apparatus 100 may further include a channel browsing processing unit which generates a thumbnail image corresponding to the channel signal or external input signal. The channel browsing processing unit can receive a stream signal (TS) output from the demodulation unit 183 or a stream signal output from the external device interface unit 172, and extract an image from the input stream signal to generate a thumbnail image. The generated thumbnail image can be entered to the controller 180 as it is or after being encoded. Furthermore, the generated thumbnail image may be also encoded in the form of a stream to be entered to the controller 180.

The controller 180 can display a thumbnail list with a plurality of thumbnail images on the display unit 151' using the entered thumbnail image. At this time, the thumbnail list can be displayed in a simple view mode in which the thumbnail images are displayed in a partial region while a predetermined image is displayed on the display unit 151' or in a view all mode the thumbnail list can be displayed in the view all mode in which the thumbnail images are displayed in the most region of the display unit 151'. The thumbnail images within a thumbnail list may be sequentially updated.

The display unit 151' converts a video signal, a data signal, an OSD signal, a control signal, and the like processed by the controller 180 or a video signal, a data signal, a control signal, and the like received from the external device interface unit 172 to generate a drive signal.

The display unit 151' may be implemented with a PDP, a LCD, an OLED, a flexible display unit 151' or the like, and also implemented with a 3D display unit 151'. For the viewing of a 3-dimensional image, the display unit 151' can be classified into an additional display unit 151' type and a self-display unit 151' type. The self-display unit 151' type refers to a display unit for implementing a 3D image with only the display unit 151' without using an additional display unit, for example, glasses or the like, and for such examples, various methods including a lenticular method, a parallax barrier method, and the like can be applied to the self-display type.

In addition, the additional display type refers to a display unit for implementing a 3D image using an additional display unit 151' in addition to the display unit 151', for such examples, various methods including a head mount display (HMD) type, a glass type, and the like can be applied the additional display type.

Meanwhile, the type of glasses can be divided into a passive method such as a polarized glasses type or the like, and an active method such as a shutter glass type or the like. Furthermore, the head mount display type can be also divided into a passive method and an active method.

In addition, the 3D viewing device 184 may be glasses for 3D capable of viewing a stereoscopic image. The 3D viewing device 195 may include polarized glasses with a passive method or shutter glasses with an active method, and is described with the concept of including the foregoing head mount type.

Meanwhile, the display unit 151' may be configured with a touch screen and thus used as an input device as well as an output device. The audio output unit 153 receives an audio-processed signal, for example, a stereo signal, a 3.1-channel signal, or a 5.1-channel signal, from the controller 170 and outputs the received audio signal as voice. The audio output unit 185 may be implemented in various types of speakers.

In addition, the controller 180 can control the display unit 151, 151' to arrange the related retrieved information by a preset layout. Part of the related retrieved may be extracted and displayed on a graphic image arranged by the layout, and the user may apply a touch input to the arranged graphic image to receive the corresponding information. Hereinafter, a method of providing information through a graphic image displayed on the display unit will be described.

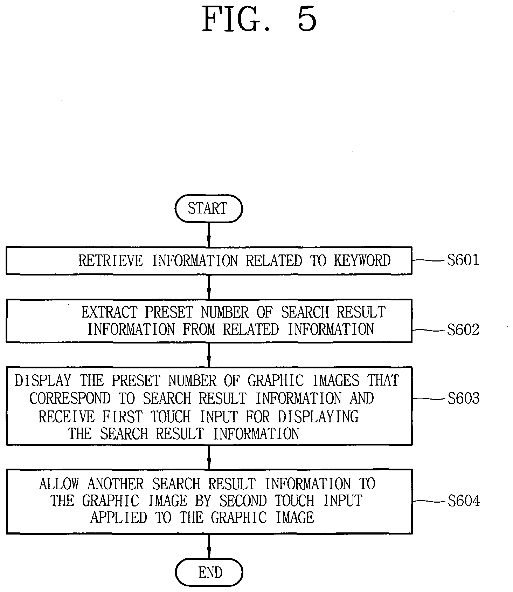

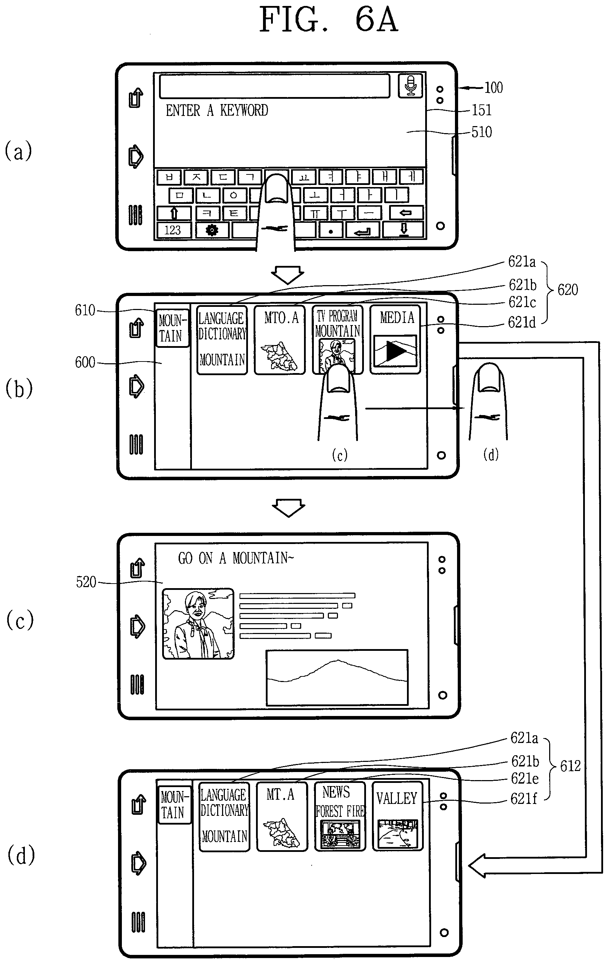

FIG. 5 is a flow chart illustrating a control method of a terminal according to an embodiment of the present invention, and FIG. 6A is a conceptual view illustrating a control method of a terminal in FIG. 5 according to an embodiment. Referring to FIGS. 5 and 6A, a method of displaying a retrieved result through a preset number of graphic images will be described.

FIG. 6A(a) illustrates a display unit for displaying a search screen 510 containing a search window for receiving a keyword input by the user. Here, the search screen 510 may correspond to an execution screen of an application for retrieving information stored in a web browser that provides a search engine or in the memory 160. The search screen 510 may include a virtual keyboard to enter a keyword on the search window. However, it is not limited to this, and a keyword according to the user's voice input through the microphone 122 may be entered thereto while displaying the search screen 510.

The controller 180 retrieves information related to a keyword entered to the search screen 510 (S601). For example, the controller 180 controls the search unit to retrieve information related to the keyword. According to an embodiment of the present invention, the search unit is defined as a constituent element that performs a function of finding the related information within a preset range. For example, the search unit may control the wireless communication unit to receive wireless signals for related information from the search engine of a webpage connected thereto based on the keyword, or control the display unit 151 to extract and display information related to the keyword from the memory 160.

The controller 180 extracts part of the related information (S602), and controls the display unit 151 to display a preset number of graphic images that correspond to the extracted search result information and receive a first touch input for displaying the search result information (S603).

As illustrated in FIG. 6A(b), when a search is completed by the search unit, the display unit 151 displays a result screen 600. The result screen 600 may include a first keyword 610 entered by a user and a graphic image 620 corresponding to the search result information.

The result screen 600 may include a preset number of graphic images 620. The preset number may be set by the user or terminal service provider, and changed by the user's setting. The result screen 600 may include at least one graphic image 620. However, the controller 180 can limit the display of the graphic image when information related to the keyword is not retrieved.

In addition, the number of the graphic images 620 may be determined by the size of the display unit 151 and the size of each graphic image 620. The controller 180 extracts the search result information from the related information based on the preset number of the graphic images 620.

The graphic image 620 may be displayed along with the first keyword 610. For example, the result screen 600 may include a first through a fourth graphic image 621a, 621b, 621c, 621d and the first keyword 610. The first through the fourth graphic image 621a, 621b, 621c, 621d and the first keyword 610 may be arranged in one row. For example, when the terminal body is disposed in a horizontal direction, the display unit 151 displays such that the first through the fourth graphic image 621a, 621b, 621c, 621d are arranged along the horizontal direction of the terminal body.

In addition, when the terminal body is rotated to be disposed in a vertical direction, the controller 180 can control the display unit 151 to adjust the size of the preset number of graphic images and display the graphic images to be arranged in a vertical direction.

In other words, the controller 180 controls the display unit 151 such that a preset number of graphic images are contained in the result screen 600.

The graphic images correspond to the extracted search result information, respectively. The controller 180 controls the display unit 151 to contain each representative image of the search result information to which the graphic image corresponds. Here, the representative image denotes an image for which the user can predict the content, category or the like of the search result information based on the representative image.

For example, the representative image may include at least one of a title representing the content of the search result information (for example, a title of the article, a title stored to correspond to the media file, an address of the webpage, etc.), a keyword of the text (for example, a word related to the keyword, a date of the article, etc.), an image (for example, a picture or photo contained in the article, a still image contained in the video file, a page of the reduced and imaged search result information, etc.), an icon shape (for example, an icon of the application in which the search result information is stored, an image contained in the relevant website or representing the relevant website, etc.), and a category (for example, a web search, a blog, an article, a dictionary, etc.).

Referring to FIG. 6A(b), the first graphic image 621a as information related to a first keyword (mountain) corresponds to a language dictionary search result for mountain. The first graphic image 621a may include text (language dictionary: mountain) as part of content contained in the language dictionary search result. The second graphic image 621b may include "Mt. A" which is part of the search result information containing information on Mount A and a map image of the Mount A.

However, an image contained in the representative image is not limited to this, and may be also differently applied according to the size of the graphic image and the corresponding search result information. The controller 180 can select content to be contained in the graphic image based on the contents contained in the extracted search result information, the size of one graphic image, and the keyword.

The graphic image is formed to receive a second touch input for displaying the search result information on the display unit 151. In other words, the display unit 151 displays search result information corresponding to the selected graphic image based on a second touch input applied to any one graphic image selected from a plurality of graphic images displayed along therewith (S604).

For example, referring to FIGS. 6A(b) and 6A(c), the display unit displays search result information 520 corresponding to a third graphic image 621c based on a second touch input applied to the third graphic image 621c. In other words, the controller 180 can control the display unit 151 to convert the result screen 600 into the search result information 520.

For example, the controller 180 can access a URL address corresponding to the third graphic image 621c to display a webpage. Furthermore, the display unit 151 displays the result screen 600 again based on a control command applied to the first manipulation unit 131 of the terminal which instructs the cancellation. According to one embodiment of the present invention, the search result information 520 is displayed as a whole on the display unit 151, but it is not limited to this.

Here, the second touch input corresponds to a touch applied to one distinguished region on the display unit 151 in which each graphic image 620 is displayed. The touch input may correspond to a non-consecutive touch input, a long touch input, and the like applied to the distinguished region.

Further, the controller 180 extracts search result information from the related information based on a preset number of graphic images. There is no limit in the criteria of extracting the search result information. For example, the controller 180 can extract the search result information according to a preset category, according to a user's preference, according to a time uploaded on the memory 160 or web (for example, extracted in recently updated order), according to relevance to the keyword (extracted in the order of high relevant information, and according to the user's set criteria or a combination thereof.

Accordingly, the user can receive a preset number of search result information from an enormous amount of related information retrieved by the keyword through the display unit 151 at the same time. Furthermore, the user can receive information representing the search result information, thereby more easily selecting his or her desired search result information.

Referring to FIGS. 6A(b) and 6A(d), the controller 180 converts the search result information corresponding to the graphic image into another search result information based on a first touch input distinguished from the second touch input applied to the graphic image. In other words, the controller 180 controls the display unit 151 to convert a representative image displayed on the graphic image to which the first touch input is applied into a representative image of the converted another search result information.

The first touch input is applied by an input scheme distinguishable from the second touch input. For example, the first touch input may correspond to a touch input scheme that is applied to any one graphic image and consecutively applied on the display unit 151. Furthermore, the consecutive first touch input may be applied to a plurality of graphic images adjacent to one another which are displayed in a consecutively arranged manner. The first touch input may be entered while moving along the direction in which the graphic images are arranged from an initially touched graphic image. However, it is not limited to this, and may be also defined as a first touch input being applied when it is sensed a touch input initially applied to a graphic image being moved by a preset distance along the direction in which the graphic images are arranged.

Referring to FIG. 6A(b), the first touch inputs are consecutively entered from the third graphic image 621c to the fourth graphic image 621d. The controller 180 converts search result information corresponding to the third graphic image 621c to another search result information. The another search result information is extracted from the keyword and related information, and the criteria of extracting the another search result information is substantially the same as the above description.

Accordingly, the controller 180 controls the display unit 151 such that the third graphic image 621c is converted into a fifth graphic image 621e containing the representative image of the another search result information. However, the shapes of the third and the fifth graphic image 621c, 621e are the same, and the locations thereof displayed on the display unit 151 are also substantially the same. The display unit 151 displays the another search result information based on a second touch input applied to the fifth graphic image 621e.

Further, the controller 180 converts search result information corresponding to the fourth graphic image 621d to still another search result information based on a first touch input moved from the third graphic image 621c to the right side on the display unit 151 illustrated on the drawing. Accordingly, the fourth graphic image 621d controls the display unit 151 to display a sixth graphic image 621f containing the representative image of the still another search result information.

In other words, the controller 180 controls the display unit 151 such that each search result information corresponding to at least one graphic image containing a graphic image to which the first touch input is initially applied is converted into another search result information. Accordingly, the display unit 151 displays the representative image of the converted another search result information on the graphic image.

For example, when the first touch input is initially applied to the first graphic image 621a and consecutively entered along the right direction, the controller 180 can convert four search result information corresponding to the first to the fourth graphic image 621a, 621b, 621c, 621d, respectively, into other search result information.

Accordingly, when the user wants to receive additional search result information other than the current displayed search result information, he or she can apply a touch input to the graphic image to easily receive other search result information related to the keyword, and the number of search result information desired to be additionally received may be also determined by the user's first touch input.

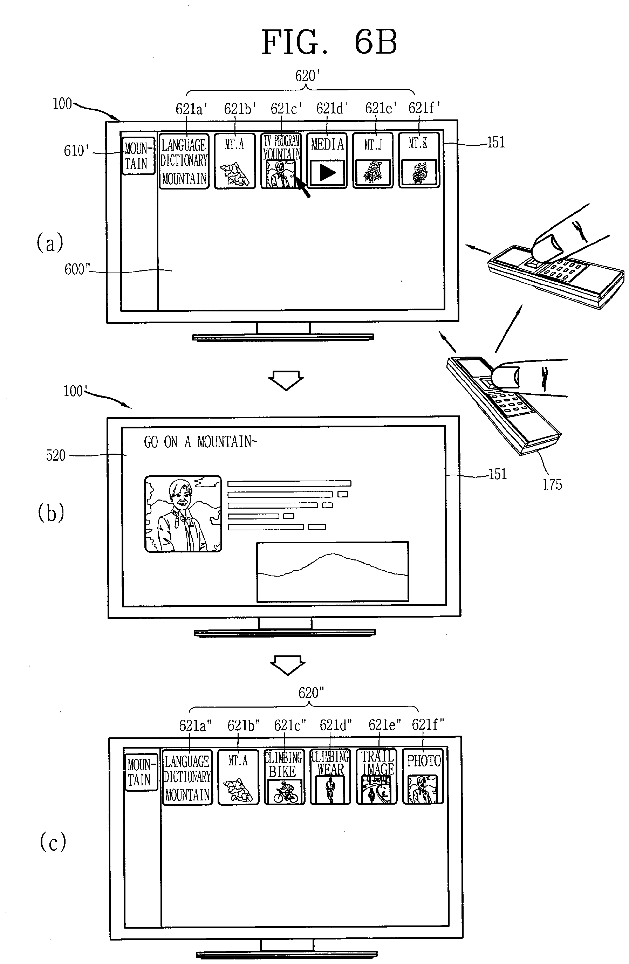

Next, FIG. 6B is a conceptual view illustrating a control method of a terminal in FIG. 5 for displaying search result information on an image display apparatus according to another embodiment of the present invention.

Referring to FIG. 6B(a), the controller 180 controls the display unit 151' such that the search result screen 600" contains a preset number of plural graphic images 620' based on the size of the display unit 151' of the image display apparatus 100'. The controller 180 can control the display unit 151' to display the number of graphic images greater than that contained in the display unit 151 based on the size of the display unit 151'. For example, the result screen 600" may include a first through a sixth graphic image 621a', 621b', 621c', 621d', 621e', 621f.

The first touch input (refer to FIG. 6A) corresponds to a first control signal applied by the external device 175, and the display unit 151 displays search result information corresponding to the graphic image by the first control signal applied to any one graphic image.

The first touch input also corresponds to a second control signal consecutively applied by the external device 175. For example, when signals are consecutively entered to a control module contained in the external device 175, and a control signals is applied to the plurality of graphic images by the movement of the external device 175 as shown in t, the controller 180 senses it in a substantially similar manner to the first touch input.

Referring to FIG. 6B(b) and 6B(c), the controller 180 converts each search result information corresponding to the four graphic images into another search result information, and controls the display unit to display the representative images of the other search result information. For example, plural graphic images 620" include graphic images 621a", 621b", 621c", 621d", 621e", 621f".

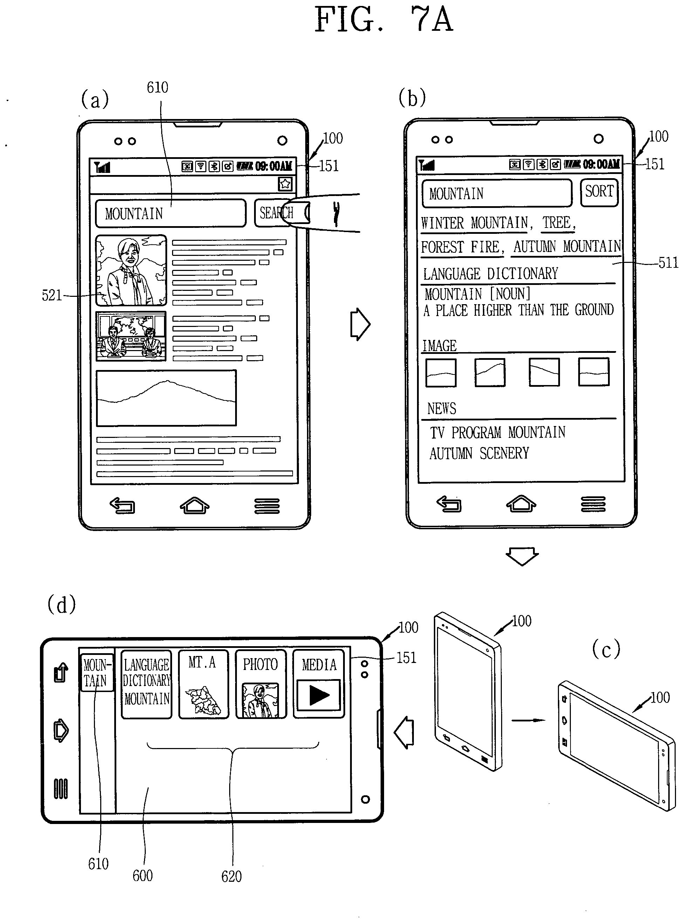

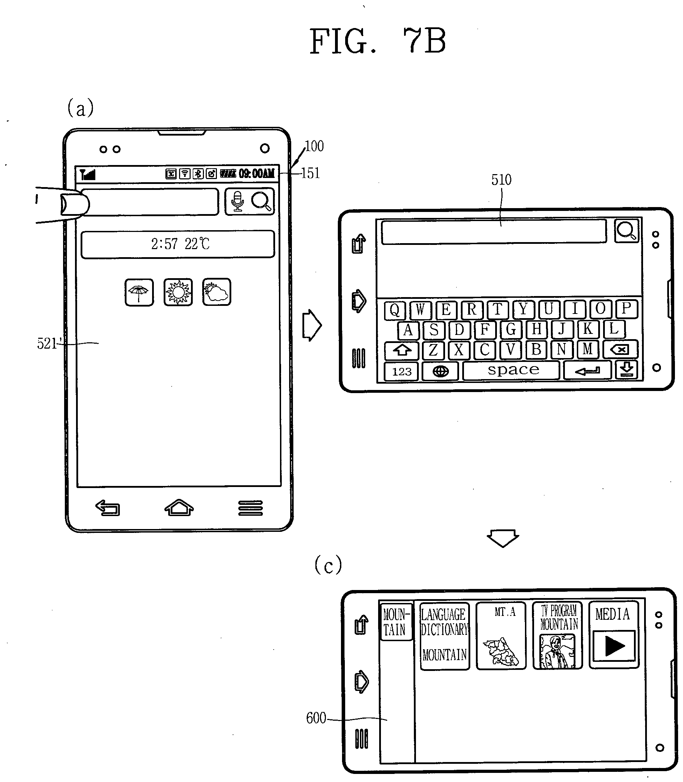

FIGS. 7A and 7B are conceptual views illustrating a method of displaying a search screen containing a graphic image by the movement of the terminal body. In particular, FIG. 7A(a) is a view illustrating the display unit 151 for displaying a webpage 521 that provides a search engine. Referring to FIG. 7A(b), a search for a first keyword 610 entered on the search window of the webpage 521 is performed, and the display unit 151 displays a search result page 511 arranged with information related to the first keyword 610. For example, the search result page 511 includes a plurality of contents arranged in a layout set by the webpage.

Referring to FIGS. 7A(c) and 7A(d), the sensing unit 140 senses the movement of the terminal body. For example, the sensing unit 140 may include an acceleration sensor, a gyro sensor, and the like, and sense whether the terminal body is disposed in the length direction (horizontal) or width direction (vertical) of the terminal body from the ground. The directions can also be referred to as landscape and portrait directions.

When the terminal body is disposed in the length direction (horizontal), the controller 180 controls the display unit 151 to convert the search result page 511 into the result screen 600. In addition, when the placement direction of the terminal body is converted into the width direction (vertical), the controller 180 can control the display unit 151 to convert the result screen 600 into the search result page 511 again. The result screen 600 in FIG. 7A(d) includes graphic images 620.

According to an embodiment of the present invention, the controller 180 controls the display unit 151 to sense when the user looks at the display unit 151 so as to display a search result in a suitable format, and thus the user can receive the search result in a suitable format with no additional setting.

Next, a method of displaying a result screen based on the search result of the memory according to another embodiment will be described with reference to FIG. 7B. In particular, FIG. 7B(a) illustrates a search page 521' for retrieving information contained in the memory 160 of the terminal.

The display unit 151 displays a search screen 510 formed along the horizontal direction of the display unit 151 based on a touch input applied to a search window contained in the search page 521'. The search screen includes a search window to which a keyword is entered and a virtual keyboard.

The controller 180 controls the display unit 151 to retrieve information on a keyword entered to the search window from the memory 160 and display the result screen 600. In other words, when a keyword is entered and a control command for performing a search is entered, the display unit 151 displays a search page in the horizontal direction of the display unit 151 and immediately display the result screen 600 containing a graphic image.

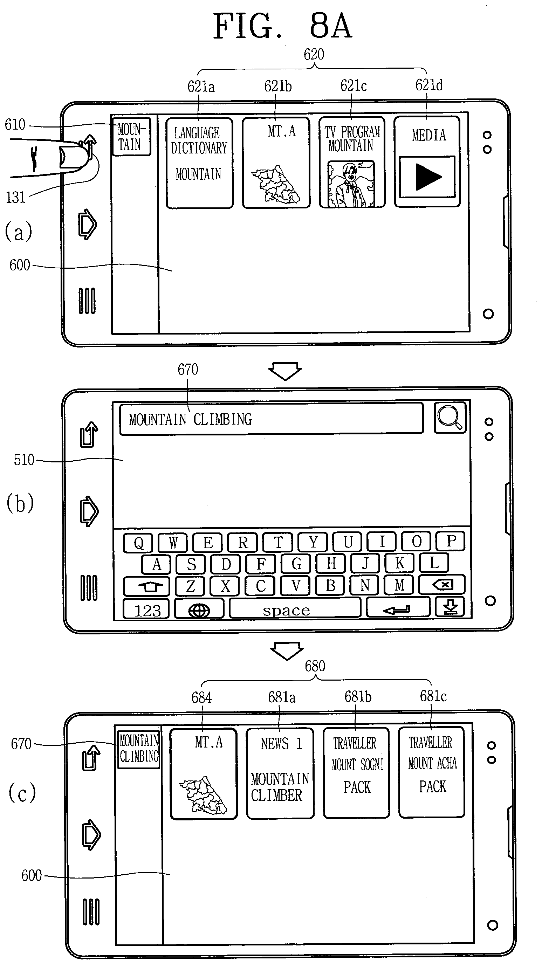

Next, FIGS. 8A through 8D are conceptual views illustrating a method of controlling the display of search result information based on a touch input applied to a graphic image. Referring to FIG. 8A, a method of displaying recorded search result information previously displayed using a graphic image will be described. In addition, the controller 180 can control the memory 160 to store search result information corresponding to the graphic image 620.

Referring to FIGS. 8A(a) and 8A(b), the display unit 151 displays the search screen 510 again based on a control command applied to the first manipulation unit 131 when the result screen 600 is displayed thereon.

Referring to FIGS. 8A(b) and 8A(c), the controller 180 performs a search based on a second keyword 670 (mountain climbing) different from the first keyword 610, and controls the display unit 151 to display a plurality of graphic images 680 corresponding to search result information extracted from the related information. For example, the controller 180 controls the display unit 151 such that the graphic image displays a first through a third graphic image 681a, 681b, 681c corresponding to search result information according to the second keyword 670.

Furthermore, the controller 180 can control such that search result information previously extracted from related information retrieved by the second keyword 670 to correspond to the graphic image corresponds to the graphic image. In other words, when related information retrieved by the second keyword 670 contains search result information stored in the memory 160, the display unit 151 displays a graphic image 684 corresponding to the search result information recorded in the memory 160. That is, the controller 180 controls the display unit 151 to extract search result information previously provided to the user and recorded in the memory 160 and display it again.

Further, the display unit 151 displays the graphic image 684 corresponding to the recorded search result information in one region on the display unit 151. For example, the display unit 151 displays the graphic image 684 corresponding to the recorded search result information at a location nearest to the second keyword 670 and display the graphic image 684 in a shape distinguished from the other graphic images (for example, in a different shape or highlighted manner).

However, the display unit 151 displays a graphic image corresponding to the recorded search result information even when a result screen according to the substantially same keyword is displayed. In this instance, the display unit 151 displays any one of the recoding search result information to correspond to the graphic image or display every recorded search result information to correspond to the graphic image.

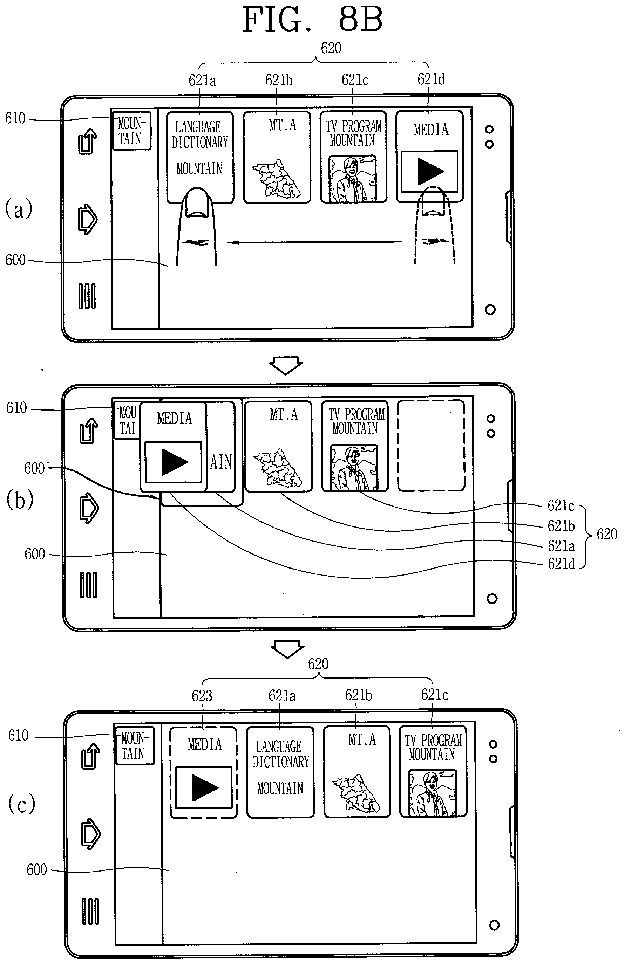

A method of displaying stored search result information based on a third touch input applied to a graphic image will be described with reference to FIG. 8B. For the sake of convenience of explanation, the stored search result information is defined as information that is distinguished from recorded search result information described in FIG. 8A.

In addition, the recorded search result information denotes information for which search result information that has been displayed is stored in the memory 160 without using the user's control command, and the stored search result information denotes information for which search result information that has been displayed is stored in the memory 160 using the user's control command (third touch input).

Referring to FIGS. 8B(a) and 8B(b), the controller 180 can change a location displayed with the graphic image on the display unit 151 based on a third touch input applied to the graphic image. Here, the third touch input corresponds to a touch input scheme distinguished from the first and the second touch input. For example, the third touch input may correspond to any one of a long touch input applied to the graphic image for a preset period of time (several seconds), a dragging input or a combination thereof.

Referring to FIG. 8B(b), the display unit 151 may include a control command receiving region 600' previously set on the result screen 600. For example, the control command receiving region 600' can be defined as a region overlapped with the first graphic image 621a displayed adjacent to the first keyword 610, but the region defined by the control command receiving region 600' is not limited to this.

When the third touch input is initially applied to the fourth graphic image 621d and released from the control command receiving region 600', the controller 180 can control the memory 160 to store search result information corresponding to the fourth graphic image 621d.

For example, when search result information corresponding to the fourth graphic image 621d corresponds to a webpage containing a specific URL, the controller 180 can control the webpage to be bookmarked. In other words, the controller 180 can control the memory 160 to store search result information corresponding to a graphic image to which the third touch input is applied in a preset virtual space of the memory.

The controller 180 can control the display unit 151 to change and display the locations of the graphic images by the third touch input. For example, the display unit 151 displays the fourth graphic image 621d to which the third touch input is applied in a region overlapped with the control command receiving region 600', and changes the location of at least one of the first through the third graphic image 621a, 621b, 621c.

FIG. 8B(c) illustrates the first through the third graphic image 621a, 621b, 621c are further sequentially moved to the right side region, but is not limited to this. For example, the first graphic image 621a may be converted to be located at a region farthest from the first keyword 610.

Furthermore, when search result information corresponding to the fourth graphic image 621d is stored in the memory 160, the controller 180 can control the display unit 151 to modify the shape of the fourth graphic image 621d to be the highlighted graphic image 623 shown in Fig. 8B(c). For example, the fourth graphic image 621d may be highlighted, and otherwise, an icon, a badge, text or the like indicating the stored information may be displayed thereon.

Accordingly, the user can apply a touch input to a graphic image containing the representative image of the search result information to more easily store the search result information, and the user can easily recognize the stored search result information on the result screen 600.

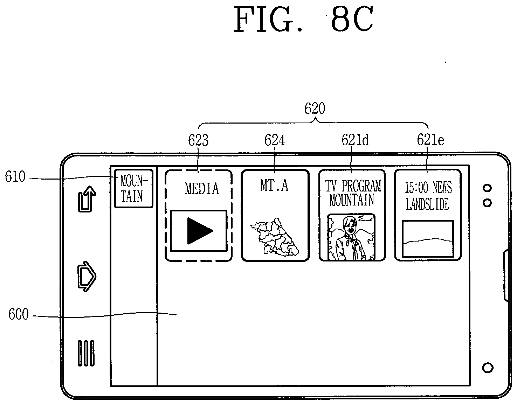

Next, FIG. 8C is a conceptual view illustrating the display unit 151 on which graphic images corresponding to the recorded search result information and stored search result information, respectively, are displayed.

The display unit 151 displays a record graphic image 623 corresponding to the recorded search result information and a store graphic image 624 corresponding to the stored search result information at a region adjacent to the first keyword 610. Furthermore, the display unit 151 displays the record graphic image 623 and the store graphic image 624 with a distinguished shape.

When either one of search result information recorded in the memory and search result information stored in the memory by the user does not exist, the controller 180 limits the display of the corresponding graphic image. Furthermore, in this instance, the display unit 151 displays a graphic image corresponding to search result information extracted from search information related to the first keyword 610.

In addition, when a second control command (refer to FIG. 5A) is applied to the record graphic image 623 and the store graphic image 624, the controller 180 can control the display unit 151 to ignore it.

When a first control command (refer to FIG. 5A) is applied to the record graphic image 623 and the store graphic image 624, the display unit 151 displays search result information corresponding to the record graphic image 623 and the store graphic image 624, respectively.

In addition, when the record graphic image and store graphic image are generated according to search result information displayed by a specific keyword, the display unit 151 displays the record graphic image and the store graphic image when search result information corresponding to the record graphic image and store graphic image are retrieved as a search result for a different keyword on the result screen 600 based on a keyword different from the specific keyword.

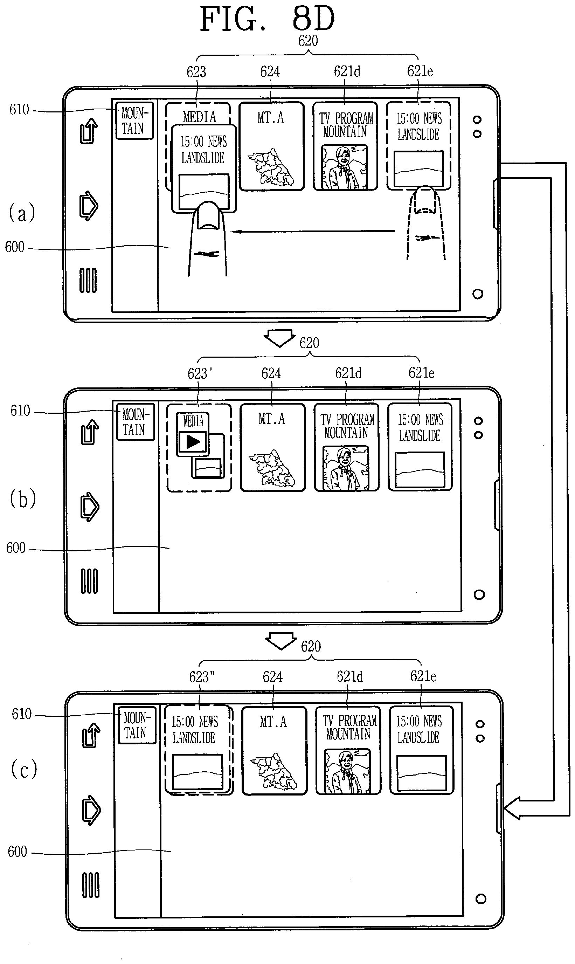

A method of storing a graphic image for a plurality of search result information based on the user's control command will be described with reference to FIG. 8D. Referring to FIGS. 8B and 8D, the controller 180 forms a graphic image 623 based on a graphic image and a third touch input applied to the control command receiving region 600'.

The controller 180 controls the memory 160 to store search result information corresponding to the fifth graphic image 621e based on a third touch input initially applied to the fifth graphic image 621e and released from the graphic image 623.

When the third touch input is released in a state that the fifth graphic image 621e the location of which has been changed based on the third touch input is displayed to be overlapped with the store graphic image 623 while displaying the store graphic image 623, the controller 180 can control the memory 160 to store search result information corresponding to the fifth graphic image 621e.

Referring to FIG. 8D(b), the controller 180 controls the display unit 151 to convert the graphic image 623 into a transformed image 623' containing a plurality of graphic images together. For example, the transformed image 623' may be displayed in such manner that a plurality of reduced graphic images are overlapped with one another. Accordingly, the user can check how many search result information have been stored in the memory 160, and roughly know the content of the search result information.

Referring to FIG. 8D(c), the controller 180 controls the display unit display unit 151 to display a graphic image corresponding to any one of a plurality of search result information stored in the memory 160 as a store graphic image 623". However, the display unit 151 displays an indication that a plurality of search result information have been stored on the graphic image 623". For example, the store graphic image 623" may be formed with a shape in which several sheets of paper are overlapped with one another.

The controller 180 can select a graphic image of search result information to be displayed as the store graphic image 623" based on a preset criteria. For example, the preset criteria may include the order of time, category, display frequency at which the search result information have been displayed again from the memory, and the like, but is not limited to them.

Accordingly, the user can check that a plurality of search result information have been stored through the graphic image. When there are a plurality of recorded search result information in the memory 160, they may be expressed with the substantially same graphic image as illustrated in FIGS. 8D(b) and 8D(c).

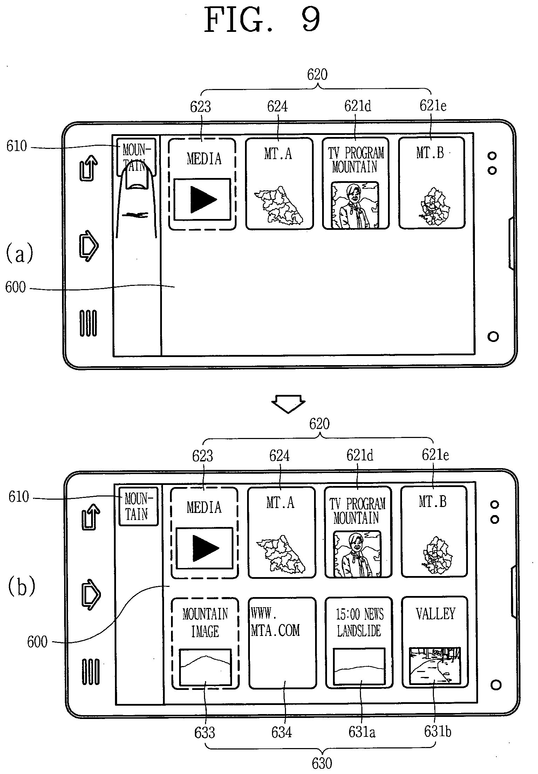

Next, FIG. 9 is a conceptual view illustrating a method of displaying an additional graphic image based on a touch input applied to a keyword. Referring to FIG. 9(a), the first keyword 610 receives the user's touch input. In other words, the controller 180 can control the display unit 151 according to a touch input applied to one region on the display unit 151 that displays the first keyword 610.

According to the present embodiment, the display unit 151 displays the preset number of or more graphic images based on a fourth touch input applied to the first keyword 610. For example, the controller 180 controls the display unit 151 to display four first additional graphic images 630 by a fourth touch input applied to a region in which the first keyword 610 is displayed while displaying four graphic images 620 on the display unit 151.

The first additional graphic images 630 may be formed with the same number as that of the graphic images 620. Furthermore, the first additional graphic images 630 may include graphic images 633, 634 corresponding to stored and recorded search result information to correspond to the store graphic image 623 and record graphic image 624, respectively.

The first additional graphic images 630 are formed in a different row from that of the graphic images 620. At least two graphic images displayed to follow the substantially same may correspond to search result information classified with the substantially same category. For example, the fourth graphic image 621d and first additional graphic image 631a may correspond to content information broadcast through each TV, and the fifth graphic image 621e and the second additional graphic image 631b may correspond to image information. However, it is not limited to this, and information corresponding to the first additional graphic images 630 may be determined based on the criteria of extracting a search result from the related information.

In addition, when a touch input with a long touch scheme for which the fourth touch input is applied for a preset period of time, the controller 180 can increase the number of the additional graphic images is increased in proportion to the applied time. Accordingly, the user can apply a fourth touch input to a region displayed with the first keyword 610 to receive a graphic image corresponding to the additional search result information.

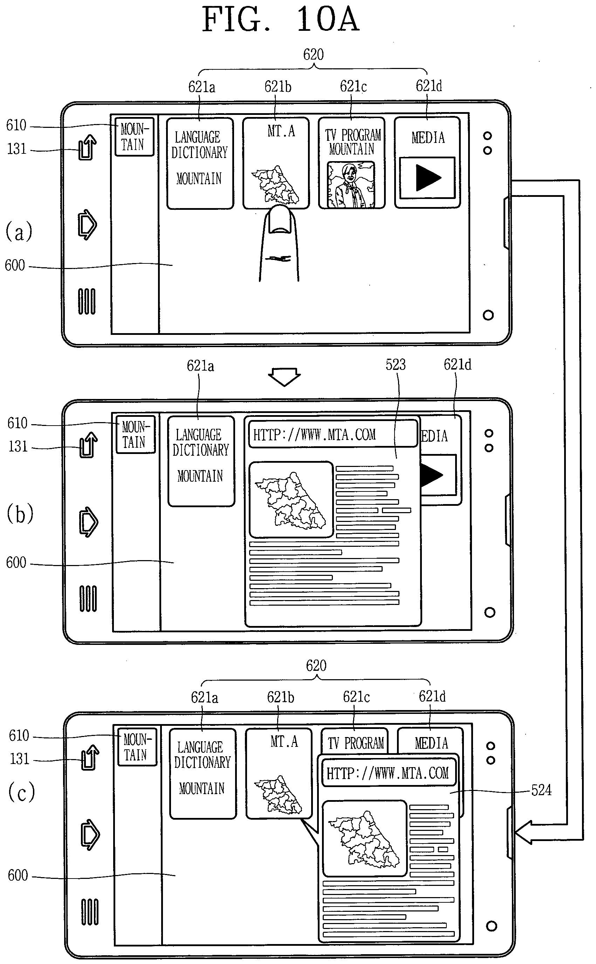

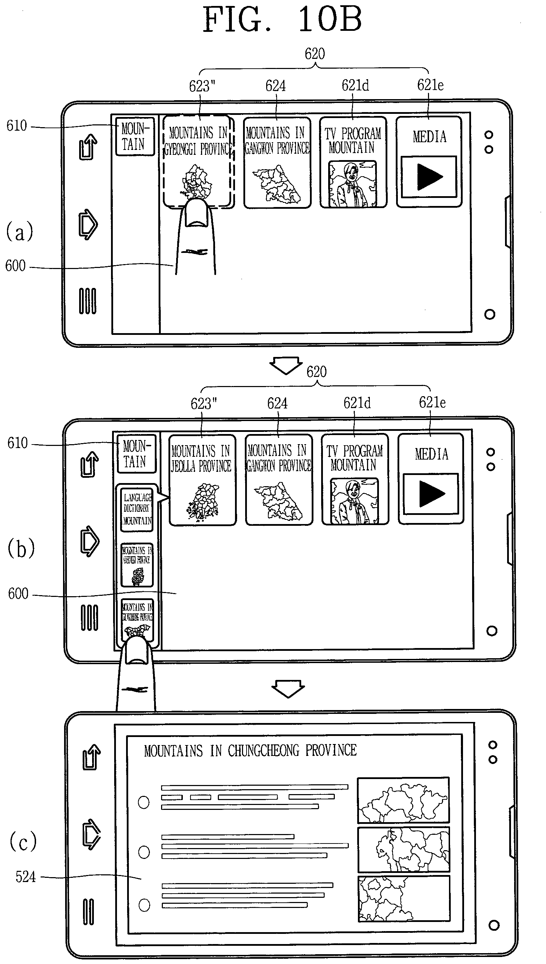

Next, FIGS. 10A and 10B are conceptual views illustrating a method of displaying search result information by a second touch input. Referring to FIGS. 10A(a) and 10A(b), the display unit 151 displays a first popup window 523 based on a touch input applied to the second graphic image 621b. The first popup window 523 is formed to cover the second graphic image 621b to which the second touch input is applied, and the search result information corresponding to the second graphic image 621b is displayed on the first popup window 523.

The first popup window 523 may be displayed to cover at least part of the first through the fourth graphic image 621a, 621b, 621c, 621d displayed on the display unit 151. The first popup window 523 may also be displayed in a semi-transparent state.

Further, the first popup window 523 may include only part of the search result information. In other words, the display unit 151 displays search result information as a whole on the display unit 151 based on a different touch input applied to the first popup window 523.

Referring to FIGS. 10A(a) and 10A(c), the display unit 151 displays a second popup window 524 based on a second touch input applied to the second graphic image 621b. The second popup window 524 is formed not to cover the second graphic image 621 to which the second touch input is applied, and may be also formed to cover part of a different graphic image displayed on the display unit 151. Furthermore, the second graphic image 621 may be displayed in a semi-transparent shape.

Meanwhile, the display unit 151 displays search result information as a whole on the display unit 151 based on a touch input applied to the second graphic image 621. The controller 180 can also control the display unit 151 to stop displaying the first or the second popup window 523, 524 based on a touch input applied to the remaining region on the display unit 151 other than a region displayed with the first or the second popup window 523, 524 or the first manipulation unit 131.

Further, the user may select search result information through a representative image contained in the graphic image, and check the search result information in advance through a popup window. The user may check the search result information in advance, and then display the search result information as a whole or select a different graphic image again.

A method of displaying search result information when a plurality of graphic images are displayed will be described with reference to FIG. 10B. Referring to FIGS. 10B(a) and 10B(b), the display unit 151 displays a graphic image 623" indicating that a plurality of search result information have been stored.

The display unit 151 displays a plurality of graphic images corresponding to a plurality of search result information, respectively, based on a fifth touch input applied to the graphic image 623". The plurality of graphic images may be displayed in a region where the different graphic image 620 and first keyword 610 are not hidden. Furthermore, the plurality of graphic images may be displayed in a smaller shape than that of the other graphic images.

Though the plurality of graphic images are displayed at a lower end of the first keyword 610 on the drawing, they are not limited to this. For example, a popup window containing the plurality of graphic images can be displayed in one region displayed with the graphic image, and otherwise, the fourth and the fifth graphic image 621d, 621e can be converted into two of the plurality of store graphic images.

Referring to FIG. 10B(c), the display unit 151 displays search result information 524 corresponding to the one graphic image based on a touch input applied to one of the plurality of graphic images. In addition, it may be controlled in a substantially similar manner to the plurality of graphic images even when a graphic image corresponding to search result information stored by the controller 180.

Accordingly, the user can receive a plurality of information with a simple graphic image, and selectively receive his or her desired search result information by a simple touch input.

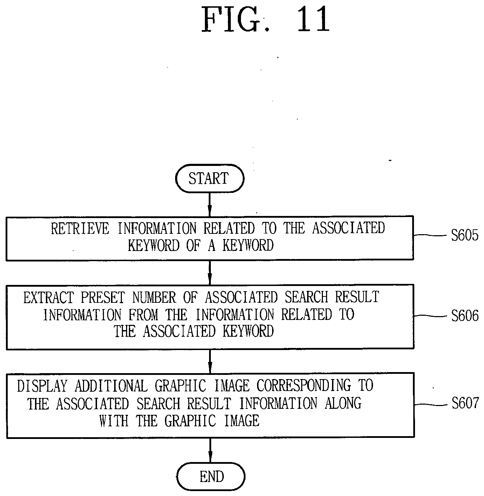

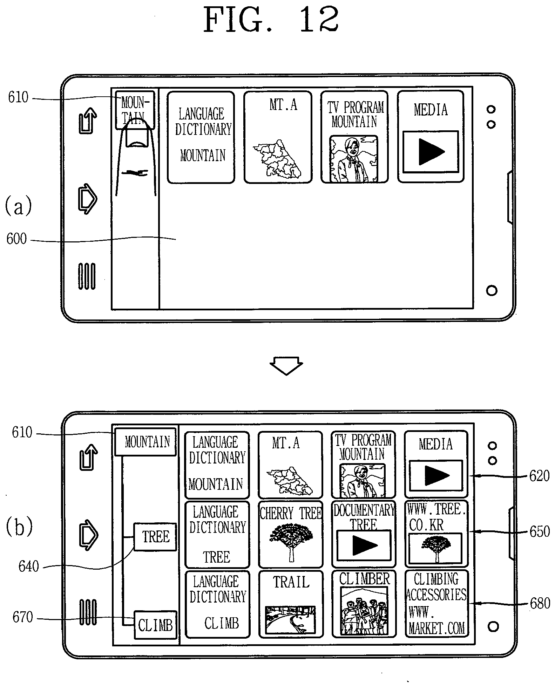

Next, FIG. 11 is a flow chart illustrating a method of displaying the associated search result information of the associated keyword of a keyword, and FIG. 12 is a conceptual view illustrating the method in FIG. 11 according to an embodiment.

The controller 180 performs a search for an associated keyword having relevance to a keyword entered by the user (S605). The relevance of the keyword to the associated keyword may be determined by a similarity to a word relevant to the keyword, a frequency retrieved along with the word, a frequency contained in search result information based on the keyword, and the like. The relevance is not limited to a specific criteria, and controlled by the user' setting, operator's setting, or the like.

The controller 180 can perform a search based on an associated keyword by the user's control command or perform a search along the retrieval of the keyword. Referring to FIGS. 12(a) and 12(b), the controller 180 performs a search based on the second and the third keyword 640, 670 based on a fifth touch input applied to one region on the display unit 151 displayed with the first keyword 610. The second and the third keyword 640, 670 have relevance to the first keyword 610, respectively, but there is no relevance between the second and the third keyword 640, 670. The second and the third keyword 640, 670 are displayed at a lower end of the first keyword 610.

Here, the fifth touch input is applied to a region defined on the display unit 151 containing the first keyword 610, and for example, it may correspond to a consecutive touch input (for example, a dragging type touch input) being moved from one region displayed with the first keyword 610 to the downward direction. However, the touch input scheme is not limited to this.

The controller 180 extracts the preset number of associated search result information from related information retrieved based on the associated keyword (S606), and controls the display unit 151 to display the preset number of second additional graphic images 650 corresponding to the associated search result information, respectively. The second additional graphic images 650 may include the same number of graphic images as that of the graphic images 620.

Furthermore, the third additional graphic images 650 are arranged in one direction and displayed in the substantially same row as that of the second keyword 640. The fourth additional graphic images 680 are also arranged in the one direction and displayed in the substantially same row as that of the third keyword 670.

Graphic images displayed in the substantially same row among the graphic images 620, the third and the fourth additional graphic images 680 may correspond to search result information classified with the substantially same category. In addition, the controller 180 can limit search result information to be extracted in a duplicated manner when duplicated related information with respect to each keyword are retrieved.

According to an embodiment of the present invention, the user can receive the search result of a keyword having relevance as well as the user's input keyword, and the user can receive a broader range of search result. Graphic images corresponding to (associated) search result information are displayed along with an associated (keyword), and thus the user can receive a preset number of extracted search result information, thereby more simply grasping an enormous amount of search result.

In addition, the graphic image, and the second and the third graphic image 650, 680 may receive the first and the second touch input, respectively, and the second and the third graphic image 650, 680 may include a store graphic image and a record graphic image. When search result information corresponding to the store graphic image and record graphic image are duplicated, the controller 180 extracts another search result information to correspond to the graphic image.

In other words, the controller 180 prevents search result information from being provided in a duplicated manner, thereby providing more information to the user. When there is no related information retrieved with respect to the keyword, the controller 180 can perform a search based on the associated keyword, and control the display unit 151 to display search result information corresponding to this using the additional data image.

In this instance, the display unit 151 may display a graphic image arranged in the same row as that of the keyword as a vacant space, thereby informing the user that there is no related information.

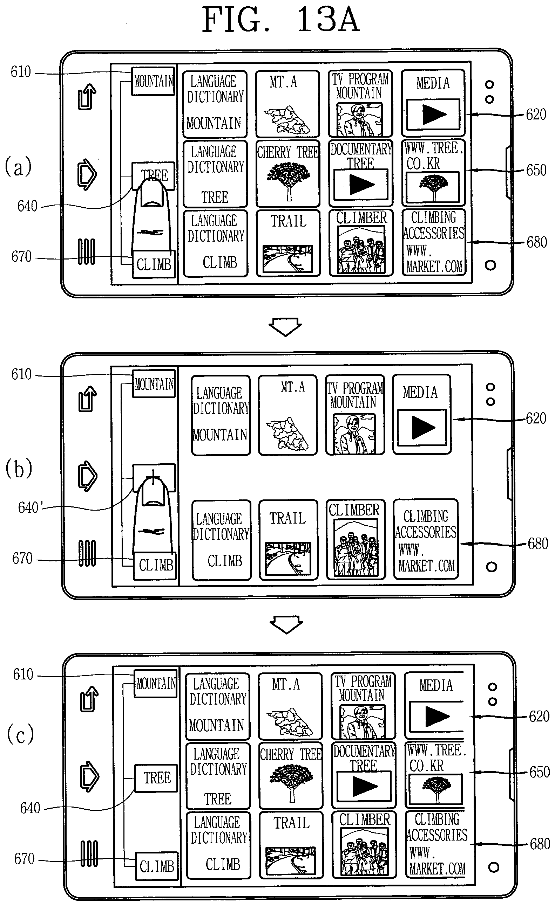

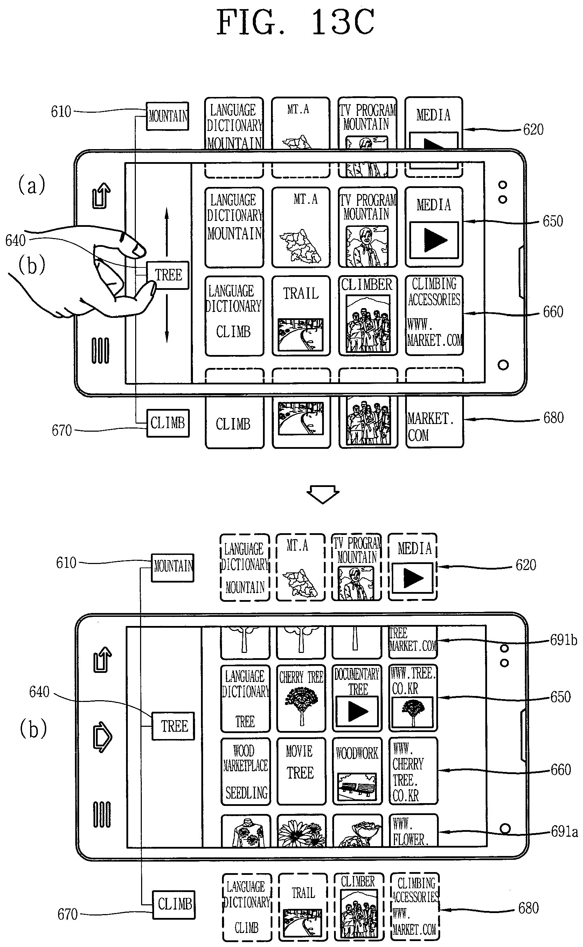

FIGS. 13A through 13D are conceptual views illustrating a method of controlling an additional graphic image using an associated keyword. Referring to FIG. 13A, a method of controlling the display of an additional graphic image with respect to an associated keyword based on a sixth touch input applied to one region displayed with the associated keyword will be described with respect to FIG. 13A.

The first through the third keyword 610, 640, 670 are arranged in a direction crossed with the one direction, and the display unit 151 are divided into each region displayed with the first through the third keyword 610, 640, 670 to receive the user's sixth touch input.

The controller 180 can control the display unit 151 to limit the display of the second additional graphic images 650 based on a fifth touch input applied to one region displayed with the second keyword 640. In other words, the controller 180 can control the display unit 151 to disappear the second additional graphic images 650.

Here, the sixth touch input my correspond to a consecutive touch input (a dragging type touch input) applied to the second keyword 640 and moved in a specific direction. For example, the sixth touch input may correspond to a dragging type touch input being moved from the second keyword 640 to the left direction.

Referring to FIG. 13A(b), the controller 180 controls the display unit 151 to convert the second keyword 640 into an icon 640' based on the sixth touch input. When the second additional graphic images 650 disappear, the controller 180 can control the display unit 151 to adjust and display the size and arrangement of the graphic images 620 and third graphic images 680 displayed on the display unit 151.

The controller 180 converts the icon 640' into the second keyword 640 again based on a touch input applied to the icon 640', and controls the display unit 151 to display the second additional graphic images 650 based on the second keyword 640. Accordingly, the user can apply a touch input to one region displayed with a keyword, thereby controlling graphic images to be displayed or hidden.

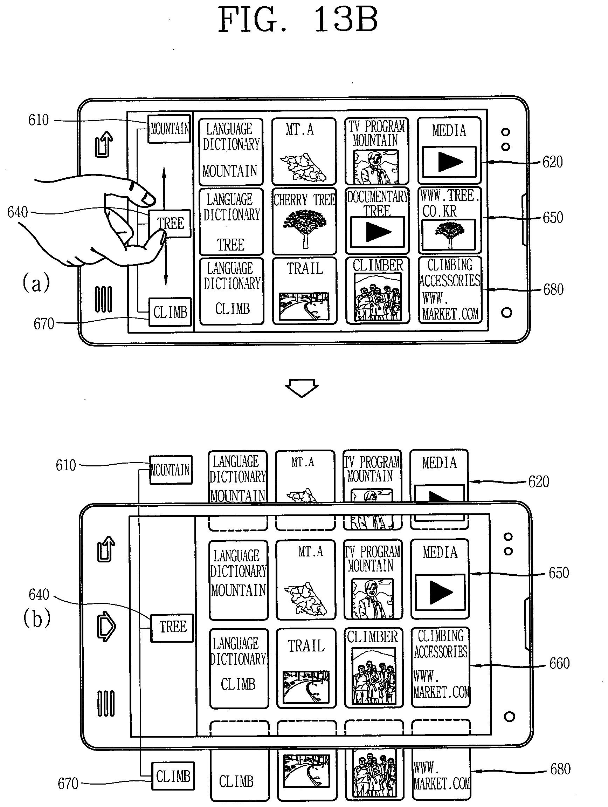

A method of displaying an additional graphic image with respect to one keyword will be described with respect to FIG. 13B. Referring to FIG. 13B, the display unit 151 displays a fourth additional graphic image 660 corresponding to the related information of the second keyword 640 based on a sixth touch input applied to one region displayed with the second keyword 640.

Here, the sixth touch input may correspond to a touch input with a pinch-in scheme, a long touch input and the like applied to one region on the display unit 151. When the sixth touch input is applied to one region displayed with the second keyword 640, the controller 180 further extracts the preset number of search result information from the related information of the second keyword 640.

The display unit 151 displays the fourth additional graphic image 660 corresponding to the extracted search result information, respectively. The fourth additional graphic image 660 is displayed adjacent to the second additional graphic images 650. In addition, the controller 180 can control the display unit 151 to limit the display of at least part of the third additional graphic image 680 and the graphic image 620 to further display the fourth additional graphic image 660.

When a touch input opposite to the fifth touch input is applied (for example, a touch input with a pinch-out scheme), the controller 180 can control the display unit 151 to limit the display of the fourth additional graphic image 660, and display the graphic image 620 and the third additional graphic image 680.

Referring to FIG. 13B, when the sixth touch input is consecutively applied to one region of the second keyword, the controller 180 extracts a preset number of search result information from the related information of the second keyword 640, and controls the display unit 151 to display fifth additional graphic images 691a, 691b with respect to the second keyword 640.

In other words, the controller 180 provides a larger amount of search result information based on the sixth touch input. Furthermore, the controller 180 controls the display unit 151 to adjust and display the shape of the each graphic image as additional graphic images are increased.

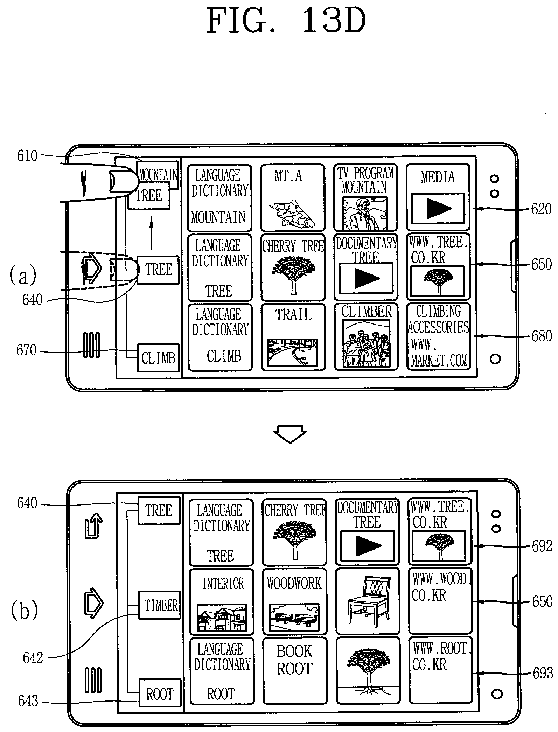

A method of displaying the search result of a lower associated keyword related to an associated keyword will be described with reference to FIG. 13D. The display unit 151 displays a search result with respect to an associated keyword having relevance to the second keyword 640 based on a seventh touch input applied to the second keyword 640.

For example, the seventh touch input may correspond to a dragging type touch input applied to a region of the second keyword 640 and released from a region of the first keyword 610. In other words, the controller 180 can convert the first keyword 610 into the second keyword 640 based on the seventh touch input.

Accordingly, the controller 180 performs a search for at least one associated keyword having relevance to the second keyword 640. As a result, the controller 180 controls the display unit 151 to convert the second keyword 640 into a fourth keyword 642 which is an associated keyword of the second keyword 640, and the third keyword 640 into a fifth keyword 643 which is another associated keyword of the second keyword 640.

The display unit 151 displays a sixth and a seventh graphic image 692, 693 as many as a preset number, respectively, corresponding to associated search result information based on the fourth and the fifth keyword 642, 643. Accordingly, when the user wants to obtain information related to an associated keyword with respect to his or her input keyword, he or she can retrieve a lower associated keyword of the associated keyword using a touch input applied to a region of the associated keyword.

In other words, the graphic images of a keyword can be controlled at once by a touch input applied to a region displayed with the keyword, thereby easily retrieving the keyword and the associated keyword. Accordingly, the user can more easily receive his or her desired search result information using the graphic image or keyword.

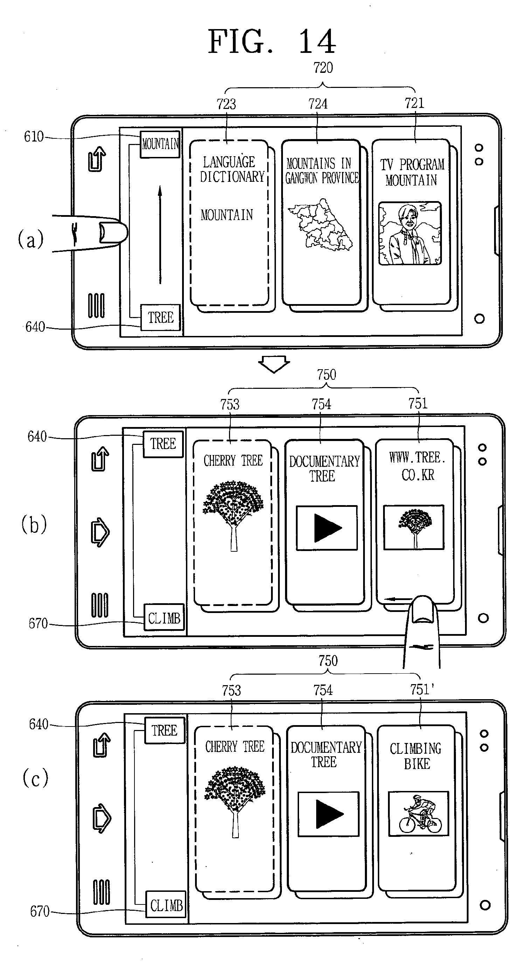

FIG. 14 is a conceptual view illustrating a method of displaying a graphic image corresponding to search result information according to another embodiment. Referring to FIG. 14(a), the display unit 151 displays a preset number of graphic images 720 corresponding to the first keyword 610 and search result information based on the first keyword 610. Furthermore, the display unit 151 can display the second keyword 640 which is an associated keyword of the first keyword 610.

The graphic images 720 may include a record graphic image 723 corresponding to search result information intentionally stored by the user and a graphic image 721 corresponding to one search result information extracted from the store graphic image 724 and the retrieved information by the user.

At least one of the graphic images 720 may include an indication that corresponds to a plurality of search result information. For example, each graphic image may include the indication of a shape such as a plurality of sheets of paper overlapped at the edge.

Referring to FIGS. 14(a) and 14(b), the display unit 151 displays a plurality of graphic images corresponding to search result information with respect to the second keyword 640, respectively, based on a consecutive eighth touch input applied to one region of the display unit 151 between the first and the second keyword 610, 640.

For example, the controller 180 can control the display unit 151 such that a region of the first and the second keyword 610, 640 arranged in the crossed direction receives a touch input and display a search result for a different keyword based on an eighth touch input applied in the crossed direction and an opposite direction thereof.

In other words, the controller 180 controls the display unit 151 to further enlarge the size of the graphic image, and display a representative image contained in the graphic image in an enlarged manner, and thus display a search result for an associated keyword using the eighth touch input.

Referring to FIGS. 14(b) and 14(c), the controller 180 controls to allow different search result information extracted from the related information of the second keyword to correspond to the graphic image based on a ninth touch input applied to one graphic image. In other words, the display unit 151 displays a representative image of the different search result information based on the ninth touch input.

Here, the ninth touch input may correspond to a dragging type touch input consecutively applied along the one direction and the opposite direction thereof. In addition, the controller 180 can control the display unit to display search result information corresponding to the graphic image using a second touch input (refer to FIG. 5A) applied to the graphic image.

Thus, according to an embodiment of the present invention, a preset number of search result information can be displayed among an enormous amount of related information retrieved by a keyword, and an additional search result may be provided only when there is a user's command.

Furthermore, according to an embodiment of the present invention, the search result of a keyword entered by the user and the search result of an associated keyword may be provided at the same time, thereby allowing the user to receive a more stereoscopic search result. In addition, the graphic image may display search result information stored by the user or stored in the memory, thereby allowing the user to check information stored in the memory without using an additional control command.

The present invention encompasses various modifications to each of the examples and embodiments discussed herein. According to the invention, one or more features described above in one embodiment or example can be equally applied to another embodiment or example described above. The features of one or more embodiments or examples described above can be combined into each of the embodiments or examples described above. Any full or partial combination of one or more embodiment or examples of the invention is also part of the invention.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims
The invention is defined by the appended independent claims. The dependent claims define preferred embodiments.

## Claims

1. A terminal, comprising:
a display unit (151) configured to display a search screen (510) for entering a search keyword (610); and
a controller (180) configured to:
retrieve information associated with the entered search keyword (610),
display a preset number of a plurality graphic images (620, 621a, 621b, 621c, 621d) representing search result information extracted from the retrieved information on the display unit (151), the graphic images (620, 621a, 621b, 621c, 621d) being arranged in one row,
display the search result information of a corresponding graphic image (620) on the display unit (151) in response to a first input, and
convert at least one of the graphic images (621c, 621d) to which a second input is applied, respectively, to at least one other graphic image (621e, 621f) representing other search result information extracted from the retrieved information,
wherein the second input corresponds to an input moving along a direction in which the graphic images are arranged from an initially selected image while consecutively applied on the display unit (151), and
wherein the second input is entered as a control signal generated by a remote controller when the control signal is consecutively applied by a movement of the remote controller.

2. The terminal of claim 1, wherein the controller (180) is further configured to switch between displaying the search result information of the corresponding graphic image on the display unit and displaying the preset number of graphic images representing the search result information based on a movement of the terminal from a first direction to a second direction.

3. The terminal of claim 1, wherein the controller (180) is further configured to only display the preset number of graphic images representing the search result information without displaying more detailed information about the search result information until a graphic image is selected.

4. The terminal of claim 1, wherein the controller (180) is further configured to:
re-display the search screen for entering a new search keyword upon receiving a new search input request,
retrieve new information associated with the entered new search keyword,
display at least one new graphic image representing search result information extracted from the retrieved new information on the display unit (151), and
when the retrieved new information includes search result information for the corresponding graphic image previously displayed before re-displaying the search screen, re-display the corresponding graphic image in a distinguishing manner from the displayed at least one new graphic image.

5. The terminal of any one of claims 1 to 4, wherein the graphic images correspond to representative images of the search result information.

6. The terminal of claim 5, wherein at least one of the displayed graphic images includes a plurality of sub graphic images including search result information corresponding to the sub graphic images, and
wherein the controller (180) is further configured to display the plurality of sub graphic images separately from the at least one graphic image when the at least one graphic image is selected.

7. The terminal of claim 5, wherein the controller (180) is further configured to display at least first and second sub keywords related to the entered keyword upon selection of the entered keyword, where the first and second sub keywords have relevance to the first keyword, but the first sub keyword has no relevance with the second sub keyword.

8. The terminal of claim 7, wherein the controller (180) is further configured to display the entered keyword and the first and second sub keywords in a first direction and display the graphic images representing search result information for the entered keyword and the first and second sub keywords in a second direction perpendicular to the first direction.

9. The terminal of any one of claims 5 to 8, wherein the controller (180) is further configured to stop displaying the graphic images for any one of the first keyword and first and second sub keywords, upon selection of said any one of the first keyword and first and second sub keyword.

10. A method of controlling a terminal, the method comprising:
displaying, via a display unit of the terminal, a search screen for entering a search keyword;
retrieving (S601), via a controller of the terminal, information associated with the entered search keyword;
displaying (S602, S603), via the display unit, a preset number of a plurality of graphic images representing search result information extracted from the retrieved information on the display unit, the graphic images being arranged in one row;
displaying, via the display unit, the search result information of a corresponding graphic image on the display unit in response to a first input; and
converting, via the controller, at least one of the graphic images to which a second input is applied, respectively, to at least one other graphic image representing other search result information extracted from the retrieved information,
wherein the second input corresponds to an input moving along a direction in which the graphic images are arranged from an initially selected image while consecutively applied on the display unit, and
wherein the second input is entered as a control signal generated by a remote controller when the control signal is consecutively applied by a movement of the remote controller.

11. The method of claim 10, further comprising:
switching between displaying the search result information of the corresponding graphic image on the display unit and displaying the preset number of graphic images representing the search result information based on a movement of the terminal from a first direction to a second direction.

## Patentansprüche

1. Endgerät, mit:
einer Anzeigeeinheit (151), die dazu eingerichtet ist, einen Suchbildschirm (510) zum Eingeben eines Suchschlüsselwortes (610) anzuzeigen, und
einer Steuereinheit (180), die eingerichtet ist zum:
Abrufen von dem eingegebenen Suchschlüsselwort (610) zugehöriger Information,
Anzeigen einer vorgegebenen Anzahl von mehreren graphischen Bildern (620, 621a, 621b, 621c, 621d), die aus der abgerufenen Information extrahierte Suchergebnisinformation darstellen, auf der Anzeigeeinheit (151), wobei die graphischen Bilder (620, 621a, 621b, 621c, 621d) in einer Reihe angeordnet sind,
Anzeigen der Suchergebnisinformation eines entsprechenden graphischen Bilds (620) auf der Anzeigeeinheit (151) in Reaktion auf eine erste Eingabe, und
Umwandeln zumindest jeweils eines der graphischen Bilder (621c, 621d), auf das eine zweite Eingabe ausgeübt wird, in zumindest ein anderes graphisches Bild (621e, 621f), das andere aus der abgerufenen Information extrahierte Suchergebnisinformation repräsentiert,
wobei die zweite Eingabe einer Eingabe entspricht, die sich entlang einer Richtung, in der die graphischen Bilder angeordnet sind, von einem anfänglich ausgewählten Bild bewegt, während sie fortwährend auf die Anzeigeeinheit (151) ausgeübt wird, und
wobei die zweite Eingabe als ein Steuersignal eingegeben wird, das von einer Fernbedienung erzeugt wird, wenn das Steuersignal fortwährend durch eine Bewegung der Fernbedienung ausgeübt wird.

2. Endgerät nach Anspruch 1, wobei die Steuereinheit (180) ferner dazu eingerichtet ist, zwischen einem Anzeigen der Suchergebnisinformation des entsprechenden graphischen Bildes auf der Anzeigeeinheit und einem Anzeigen der vorgegebenen Anzahl der die Suchergebnisinformation repräsentierenden graphischen Bilder basierend auf einer Bewegung des Endgeräts von einer ersten Richtung in eine zweite Richtung umzuschalten.

3. Endgerät nach Anspruch 1, wobei die Steuereinheit (180) ferner dazu eingerichtet ist, nur die vorgegebene Anzahl der die Suchergebnisinformation repräsentierenden graphischen Bilder anzuzeigen, ohne detailliertere Information über die Suchergebnisinformation anzuzeigen, bis ein graphisches Bild ausgewählt wird.

4. Endgerät nach Anspruch 1, wobei die Steuereinheit (180) ferner eingerichtet ist zum:
Wiederanzeigen des Suchbildschirms zum Eingeben eines neuen Suchschlüsselwortes nach Empfangen einer neuen Sucheingabeanforderung,
Abrufen neuer Information, die dem eingegebenen, neuen Suchschlüsselwort zugehörig ist,
Anzeigen zumindest eines neuen graphischen Bildes, das aus der abgerufenen, neuen Information extrahierte Suchergebnisinformation repräsentiert, auf der Anzeigeeinheit (151), und
wenn die abgerufene neue Information Suchergebnisinformation für das zuvor angezeigte, entsprechende graphische Bild vor dem Wiederanzeigen des Suchbildschirms enthält, Wiederanzeigen des entsprechenden graphischen Bilds in einer von dem angezeigten, zumindest einen neuen graphischen Bild unterscheidbaren Weise.

5. Endgerät nach einem der Ansprüche 1 bis 4, wobei die graphischen Bilder repräsentativen Bildern der Suchergebnisinformation entsprechen.

6. Endgerät nach Anspruch 5, wobei zumindest eines der angezeigten graphischen Bilder mehrere graphische Subbilder umfasst, die den graphischen Subbildern entsprechende Suchergebnisinformation enthalten, und
wobei die Steuereinheit (180) ferner dazu eingerichtet ist, die mehreren graphischen Subbilder getrennt von dem zumindest einen graphischen Bild anzuzeigen, wenn das zumindest eine graphische Bild ausgewählt wird.

7. Endgerät nach Anspruch 5, wobei die Steuereinheit (180) ferner dazu eingerichtet ist, nach einer Auswahl des eingegebenen Schlüsselwortes zumindest erste und zweite mit dem eingegebenen Schlüsselwort in Beziehung stehende Unterschlüsselworte anzuzeigen, wobei die ersten und zweiten Unterschlüsselworte eine Relevanz bezüglich des ersten Schlüsselwortes haben, das erste Unterschlüsselwort jedoch keine Relevanz bezüglich des zweiten Unterschlüsselwortes hat.

8. Endgerät nach Anspruch 7, wobei die Steuereinheit (180) ferner dazu eingerichtet ist, das eingegebene Schlüsselwort und die ersten und zweiten Unterschlüsselworte in einer ersten Richtung anzuzeigen und die graphischen Bilder, welche Suchergebnisinformation für das eingegebene Schlüsselwort und die ersten und zweiten Unterschlüsselworte repräsentieren, in einer zweiten, zur ersten Richtung rechtwinkligen Richtung anzuzeigen.

9. Endgerät nach einem der Ansprüche 5 bis 8, wobei die Steuereinheit (180) ferner dazu eingerichtet ist, nach Auswahl irgendeines des ersten Schlüsselwortes und des ersten und zweiten Unterschlüsselwortes ein Anzeigen der graphischen Bilder für irgendeines des ersten Schlüsselwortes und der ersten und zweiten Unterschlüsselworte zu beenden.

10. Verfahren zum Steuern eines Endgerätes, wobei das Verfahren umfasst:
Anzeigen, mittels einer Anzeigeeinheit des Endgeräts, eines Suchbildschirms zum Eingeben eines Suchschlüsselwortes,
Abrufen (S610), mittels einer Steuereinheit des Endgeräts, von dem eingegebenen Suchschlüsselwort zugehöriger Information,
Anzeigen (S602, S603), mittels der Anzeigeeinheit, einer vorgegebenen Anzahl mehrerer graphischer Bilder, welche aus der abgerufenen Information extrahierte Suchergebnisinformation repräsentieren, auf der Anzeigeeinheit, wobei die graphischen Bilder in einer Reihe angeordnet sind,
Anzeigen, mittels der Anzeigeeinheit, der Suchergebnisinformation eines entsprechenden graphischen Bildes auf der Anzeigeeinheit in Reaktion auf eine erste Eingabe, und
Umwandeln, mittels der Steuereinheit, zumindest jeweils eines der graphischen Bilder, auf die eine zweite Eingabe ausgeübt wird, in zumindest ein anderes graphisches Bild, welches aus der abgerufenen Information extrahierte, andere Suchergebnisinformation repräsentiert,
wobei die zweite Eingabe einer Eingabe entspricht, die sich entlang einer Richtung, in der die graphischen Bilder angeordnet sind, von einem anfänglich ausgewählten Bild bewegt, während sie fortwährend auf die Anzeigeeinheit ausgeübt wird, und
wobei die zweite Eingabe als ein Steuersignal eingegeben wird, das von einer Fernbedienung erzeugt wird, wenn das Steuersignal fortwährend durch eine Bewegung der Fernbedienung ausgeübt wird.

11. Verfahren nach Anspruch 10, ferner umfassend:
Umschalten zwischen einem Anzeigen der Suchergebnisinformation des entsprechenden graphischen Bildes auf der Anzeigeeinheit und einem Anzeigen der vorgegebenen Anzahl der die Suchergebnisinformation repräsentierenden graphischen Bilder basierend auf einer Bewegung des Endgeräts aus einer ersten Richtung in eine zweite Richtung.

## Revendications

1. Terminal, comprenant:
une unité d'affichage (151) conçue pour afficher un écran de recherche (510) destiné à entrer un mot clé de recherche (610); et
un organe de commande (180) conçu pour:
récupérer des informations associées au mot clé de recherche entré (610),
afficher un nombre prédéfini d'une pluralité d'image graphiques (620, 621a 621b, 621c, 621d) représentant des informations de résultats de recherche extraites à partir des informations récupérées sur l'unité d'affichage (151), les images graphiques (620, 621a, 621b, 621c, 621d) étant disposées en rangée,
afficher les informations de résultat de recherche d'une image graphique correspondante (620) sur l'unité d'affichage (151) en réponse à une première entrée, et
convertir au moins l'une des images graphiques (621c, 621d) à laquelle est appliquée une seconde entrée, respectivement en au moins une autre image graphique (621e, 621f) représentant d'autres informations de résultat de recherche extraites à partir des informations récupérées,
la seconde entrée correspondant à une entrée se déplaçant dans une direction dans laquelle sont disposées les images graphiques à partir d'une image initialement sélectionnée tandis qu'elle est consécutivement appliquée sur l'unité d'affichage (151) et
la seconde entrée étant entrée sous la forme d'un signal de commande produit par un organe de commande à distance lorsque le signal de commande est consécutivement appliqué par un mouvement de l'organe de commande à distance.

2. Terminal selon la revendication 1, l'organe de commande (180) étant en outre conçu pour commuter entre l'affichage des informations de résultat de recherche de l'image graphique correspondante sur l'unité d'affichage et l'affichage du nombre prédéfini d'images graphiques représentant les informations de résultat de recherche en fonction d'un mouvement du terminal à partir de la première direction vers la seconde direction.

3. Terminal selon la revendication 3, l'organe de commande (180) étant en outre conçu pour afficher uniquement le nombre prédéfini d'images graphiques représentant les informations de résultat de recherche sans afficher des informations plus détaillées concernant les informations de résultat de recherche jusqu'à ce qu'une image graphique soit sélectionnée.

4. Terminal selon la revendication 1, l'organe de commande (180) étant en outre conçu pour:
afficher de nouveau l'écran de recherche destiné à entrer un nouveau mot clé de recherche à la réception d'une nouvelle requête d'entrée de recherche,
récupérer de nouvelles informations associées au nouveau mot clé de recherche entré,
afficher au moins une nouvelle image graphique représentant des informations de résultat de recherche extraites à partir des nouvelles informations récupérées sur l'unité d'affichage (151) et
lorsque les nouvelles informations récupérées comprennent des informations de résultat de recherche pour l'image graphique correspondante affichée précédemment avant d'afficher de nouveau l'écran de recherche, afficher de nouveau l'image graphique correspondante de manière différente de ladite nouvelle image graphique affichée.

5. Terminal selon l'une quelconque des revendications 1 à 4, les images graphiques correspondant à des images de représentation des informations de résultat de recherche.

6. Terminal selon la revendication 5, au moins l'une des images graphiques affichées comprenant une pluralité de sous-images graphiques comprenant des informations de résultat de recherche correspondant aux sous-images graphiques et
l'organe de commande (180) étant en outre conçu pour afficher la pluralité de sous-images graphiques séparément de ladite image graphique lorsque ladite image graphique est sélectionnée.

7. Terminal selon la revendication 5, l'organe de commande (180) étant en outre conçu pour afficher au moins des premier et second mots clés relatifs au mot clé entré au moment de la sélection du mot clé entré, les premier et second mots clés ayant une pertinence par rapport au premier mot clé, mais le premier sous-mot clé n'ayant aucune pertinence par rapport au second sous-mot clé.

8. Terminal selon la revendication 7, l'organe de commande (180) étant en outre conçu pour afficher le mot clé entré et les premier et second mots clés dans une première direction et afficher les images graphiques représentant les informations de résultat de recherche pour le mot clé entré et les premier et second sous-mots clés dans une seconde direction perpendiculaire à la première direction.

9. Terminal selon l'une quelconque des revendications 5 à 8, l'organe de commande (180) étant en outre conçu pour arrêter l'affichage des images graphiques pour n'importe quel mot clé parmi le premier mot clé et les premier et second sous-mots clés, au moment de la réception dudit n'importe quel mot clé parmi le premier mot clé et les premier et second sous-mots clés.

10. Procédé de commande d'un terminal, le procédé consistant à:
afficher, par l'intermédiaire d'une unité d'affichage du terminal, un écran de recherche destiné à entrer un mot clé de recherche;
récupérer (S601), par l'intermédiaire d'un organe de commande du terminal, des informations associées au mot clé de recherche entré;
afficher (S602, S603) par l'intermédiaire de l'unité d'affichage, un nombre prédéfini d'une pluralité d'images graphiques représentant les informations de résultat de recherche extraites des informations récupérées sur l'unité d'affichage, les images graphiques étant disposées en rangée;
afficher, par l'intermédiaire de l'unité d'affichage, les informations de résultat de recherche d'une image graphique correspondante sur l'unité d'affichage en réponse à une première entrée; et
convertir, par l'intermédiaire de l'organe de commande, au moins l'une des images graphiques à laquelle est appliquée une seconde entrée, respectivement en au moins une autre image graphique représentant d'autres informations de résultat de recherche extraites à partir des informations récupérées,
la seconde entrée correspondant à une entrée se déplaçant dans une direction dans laquelle sont disposées les images graphiques à partir d'une image initialement sélectionnée tandis qu'elle est appliquée consécutivement sur l'unité d'affichage, et
la seconde entrée étant entrée sous la forme d'un signal de commande produit par un organe de commande à distance lorsque le signal de commande est consécutivement appliqué par un mouvement de l'organe de commande à distance.

11. Procédé selon la revendication 10, consistant en outre à:
commuter entre l'affichage des informations de résultat de recherche de l'image graphique correspondante sur l'unité d'affichage et l'affichage du nombre prédéfini des images graphiques représentant les informations de résultat de recherche en fonction d'un mouvement du terminal à partir de la première direction vers la seconde direction.
